# EUROPEAN PATENT SPECIFICATION

(11) **EP 1 528 657 B1**
(45) Date of publication and mention of the grant of the patent: **11.02.2015**
(21) Application number: 03784616.9
(22) Date of filing: 08.08.2003
(51) Int. Cl.: H02K 15/06, H02K 15/04

(54) **COIL FORMING METHOD AND COIL FORMING DEVICE**
SPULENERZEUGUNGSVERFAHREN UND SPULENERZEUGUNGSEINRICHTUNG
PROCEDE ET DISPOSITIF DE BOBINAGE

(30) Priority: 08.08.2002 JP 2002231978; 21.04.2003 JP 2003116241
(43) Date of publication of application: 04.05.2005
(73) Proprietor: AISIN AW CO., LTD., Anjo-shi, Aichi-ken, 444-1192 (JP)
(72) Inventor: Hashimoto, Shingo, Anjo-shi, Aichi-ken 444-1192 (JP); Kuroyanagi, Tooru, Anjo-shi, Aichi-ken 444-1192 (JP); Yamaguchi, Tsuyoshi, Anjo-shi, Aichi-ken 444-1192 (JP)
(74) Representative: Vossius & Partner
(86) International application number: PCT/JP2003/010145
(87) International publication number: WO 2004/015845

(56) References cited:
- JP-A- 3 159 542
- JP-A- 9 009 588
- JP-A- 11 178 291
- JP-A- 51 138 803
- JP-A- 55 094 567
- JP-A- 56 012 845
- JP-A- 58 046 850
- JP-A- 63 001 349
- JP-A- 2003 158 860

## Description

### TECHNICAL FIELD

The present invention relates to an apparatus and a method for forming a coil to be used in a motor (e.g., an electric motor).

### BACKGROUND ART

When a motor including a stator having a plurality of single-pole coils inserted in the slots of a stator core is to be manufactured, for example, it is necessary to form a coil having a plurality of continuous single-pole coils.

In the coil forming method of the prior art, a winder for turning around a stationary bobbin to extract an electric wire (or a wire) is used to form the single-pole coil by winding the electric wire around the bobbin. In order to form another single-pole coil continuously of the single-pole coil obtained, moreover, the winder is turned in the opposite direction around the bobbin again fixed, to form a single-pole coil having a reversed winding direction.

Moreover, a coil forming method similar to the aforementioned one for feeding the electric wire from a winder turning around the bobbin is disclosed in JP-A-2000-253631, for example. In Patent Publication, the external diameter of the bobbin for winding the electric wire can be changed, and a flyer is turned as the aforementioned winder around the bobbin. The wound single-pole coils are sequentially pushed out to a blade thereby to form the continuous-pole coil to be used in the motor.

However, the coil forming method of the prior art thus far described has the following problems. Specifically, the electric wire is fed while the winder is being turned, so that it is wound on the bobbin while being twisted according to the turning motions of the winder. In case the coil is formed with the electric wire being twisted, the improvement in the occupation percentage of the coil is deteriorated by the reasons that the electric wire cannot be moved by themselves into slots or that a dead space is established by the twist.

The present invention has been conceived in view of those problems of the prior art and contemplates to provide a coil forming method and a coil forming apparatus, which can form a single-pole coil without twisting an electric wire.

### DISCLOSURE OF THE INVENTION,

A precise definition of the invention is given in the claims.

In the coil forming apparatus of the invention, by the turning device, the magazine is turned as a whole either around the axis of any one of the bobbins for the winding or around a line generally parallel to the axis thereby to form the single-pole coil. Like the foregoing invention, therefore, the single-pole coil can be formed around each bobbin without twisting the electric wire.

In the aforementioned first invention, it is preferred (Claim 2) that the winding of the electric wire is performed such that any one for the winding of the bobbins is performed such that it is protruded farther more than the remaining bobbins.

In this case, the protruded bobbin can be easily fed with the electric wire in a direction perpendicular to the axis thereof. Therefore, it is easy to feed the electric wire and to wind the electric wire around the bobbin, so that the single-pole coil can be more easily formed with little twist.

Moreover, it is preferred (Claim 2) that the winding of the electric wire is performed such that the axes of the bobbins for winding the electric wire are sequentially brought close to the rotating center of the magazine.

In this case, the magazine is provided with the plurality of bobbins for forming the continuous-pole coil. However, the winding of the electric wire can be performed with the winding bobbin being hardly eccentric to the turning center. Therefore, the single-pole coil can be more easily formed with little twist.

Moreover, it is preferred (Claim 3) that the bobbins are arranged to have their axes offset from each other to have no alignment.

In this case, the electric wire can be turned by turning the magazine as a whole around the axes of the bobbins offset from each other to have no alignment.

Moreover, it is preferred that a magazine is used to include a base holder and a plurality of bobbins so arranged on the outer circumference of the base holder that they can move relative to the base holder; that the method comprises: a bobbin protruding step of moving the first one of the bobbins to protrude farther than the remaining bobbins; and a winding step of winding the first bobbin protruded with the electric wire to form the single-pole coil by feeding the first bobbin generally in one direction with the electric wire and by turning the magazine as a whole either around the axis of the first bobbin or around the center generally parallel to the axis; and that the bobbin protruding step and the winding step are sequentially performed on the adjoining bobbins to form the motor coil.

In this case, the magazine used has a unique construction including the base holder and the bobbins. As described above, the bobbin protruding step and the winding step are sequentially performed for the individual bobbins. Here, the winding step is performed by turning the magazine as a whole either around the axis of the protruded bobbin or around the line parallel to the axis. Therefore, the electric wire can be fed in one direction, as described above, while making it unnecessary unlike the prior art to turn the electric wire itself. Therefore, the single-pole coil can be formed around the bobbin without twisting the electric wire.

Moreover, the winding step follows the bobbin protruding step. Specifically, the bobbin to be subjected to the winding step can be changed by performing the bobbin protruding step. This makes it unnecessary to prepare any special space for feeding the electric wire between the adjoining bobbins. This makes it possible to make the length of the crossover wire sufficiently small between the single-pole coils obtained. Therefore, it is possible to form the single-pole coil without any twist of the electric wire and to reduce the length of the crossover wire between the single-pole coils.

Here, the method for protruding the bobbin at the bobbin protruding step, as described later, can adopt not only the method for moving the bobbin linearly forward in the axial direction thereby to protrude in the axial direction but also the method for swinging the bobbin to have an axis substantially perpendicular to the axis of another bobbin thereby to protrude sideway of the latter bobbin. More specifically, at the bobbin protruding step, any special one is required for the direction and method to protrude the bobbin, so long as the electric wire to be fed to the protruded bobbin has no interference with another bobbin when the magazine is turned at the subsequent winding step.

Moreover, it is preferred (Claim 4) that the bobbins are arranged to move forward or backward generally linearly in its axial direction so that one bobbin is moved forward at the bobbin protruding step to protrude farther than the remaining bobbins. In this case, it is possible to simplify the moving mechanism of the bobbin and to facilitate the protruding action.

Here, not only the aforementioned substantially linear forward or backward movement but also various moving methods such as the method for turning the bobbin or the method for combining the forward or backward movement and the swinging motion can be applied to the aforementioned bobbin moving method.

Moreover, it is preferred (Claim 5) that the bobbin retracting step is performed after the winding step to move the bobbin having the single-pole coil backward. In this case, it is possible to easily perform the other subsequent bobbin protruding step and winding step.

Moreover, it is preferred (Claim 6) that the winding step is performed by reversing the turning direction of the magazine sequentially for each of the bobbins. In this case, it is possible to easily form the coil having the continuous single-pole coils of different wired directions.

In the aforementioned second invention, it is preferred (Claim 10) that the magazine performs the winding of the electric wire such that any one for the winding of the bobbins is performed such that it is protruded farther more than the remaining bobbins.

In this case, the individual bobbins can be separately protruded farther than the remaining bobbins. Therefore, the protruded bobbin can be easily fed with the electric wire in the direction perpendicular to the axis thereof. As a result, it is easy to feed the electric wire and to wind the electric wire around the bobbin, and it is possible to form the single-pole coil having little twist more easily.

Moreover, it is preferred (Claim 7) that the magazine performs the winding of the electric wire such that the axes of the bobbins for winding the electric wire are sequentially brought close to the rotating center of the magazine.

In this case, although the magazine is provided with the plurality of bobbins for forming the continuous-pole coil, the wiring of the electric wire can be performed with the bobbin for the winding operation being hardly offset from the rotating center. As a result, it is possible to form the single-pole coil having little twist more easily.

Moreover, it is preferred (Claim 9) that the bobbins are arranged to have their axes offset from each other to have no alignment.

In this case, the winding operation of the electric wire can be performed by turning the magazine as a whole around the center of the axes of the bobbins, which are offset from each other to have no alignment.

Moreover, it is preferred (Claim 10) that the bobbins are arranged such that a virtual line joining the centers of gravity of the bobbins may be generally circular.

In this case, the individual bobbins can be easily arranged close to each other in the magazine so that the lengths of the crossover wires joining the single-pole coils wound around the bobbins can be easily shortened.

In this case, moreover, that one of the bobbins for winding the electric wire can be easily brought close to the turning center of the magazine.

Moreover, it is preferred (Claim 11) that the axes of the bobbins are radially arranged either outward or obliquely outward from the center of the generally circular virtual line.

In this case, the bobbins can be easily arranged, and the bobbin for winding the electric wire can be easily brought to the turning center of the magazine by turning the magazine carrying the bobbins.

Moreover, it is possible (Claim 12) that the axes of the bobbins are arranged generally in parallel with each other.

In this case, too, the bobbins can be easily arranged, and the bobbin for winding the electric wire can be easily brought to the turning center of the magazine by turning the magazine carrying the bobbins.

Moreover, it is preferred (Claim 7) that the magazine includes a base holder and a plurality of bobbins so arranged on the outer circumference of the base holder that they can move relative to the base holder so that any one of the bobbins may protrude farther than the remaining ones, and that the turning device turns the magazine as a whole either around the axis of the protruded bobbin or around a line generally parallel to the axis.

In this case, by feeding the electric wire to the protruded bobbin and by turning the magazine as a whole either around the axis of the protruded bobbin or around the line generally parallel to that axis, it is possible to form the single-pole coil without any twist of the electric wire and to reduce the length of the crossover wire between the single-pole coils.

Moreover, it is preferred (Claim 13) that the base holder has a disc shape; and in that the bobbins are arranged to move forward or backward along axes extending radially from the center point of the base holder. In this case, when the turning center of the entire magazine by the turning device is to be changed for the individual bobbins, the magazine may be slightly turned as a whole around the center point of the base holder so that it may come into engagement with the turning device. As a result, it is easy to change the turning center when the bobbin for the winding operation is alternated.

Moreover, it is preferred (Claim 14) that the bobbins have a sector shape widened along the axes. In this case, the single-pole coil to be formed around the bobbin can have its shape widened along the axis thereof. Therefore, it is easy to form the coil shape suited for the case, in which it is mounted from the inner circumference of the stator core, for example.

Moreover, it is preferred (Claim 15) that each of the bobbins includes such shaping blocks removably as to arrange the shape of the single-pole coil to be wound. In this case, the shape of the single-pole coil can be easily changed by employing the shaping blocks of different shapes.

Moreover, it is preferred (Claim 16) that the magazine is formed such that a contour formed by the distal ends of all of the bobbins being moved backward has a circular shape around the center point of the base holder. In case the coil is to be inserted from the inner face of the ring-shaped stator core, the coil can be mounted directly on the stator core without being transferred to another device, by arranging the magazine having the coil formed and held, on the inner face side of the stator core. Therefore, the motor manufacturing process can be rationalized far better than the prior art.

Moreover, it is preferred (Claim 17) that separate plates extended from the outer circumference of the base holder are arranged on the two sides of each of the bobbins thereby to hold predetermined spacings between the separate plates and the bobbins. In this case, when the bobbin is moved backward after the single-pole coil was formed around it, the coil can be arranged in the space of the predetermined spacing between the separate plates and the bobbins, so that the coil can be retained in the magazine while keeping its shape in the satisfactory state.

### BRIEF DESCRIPTION OF THE DRAWINGS

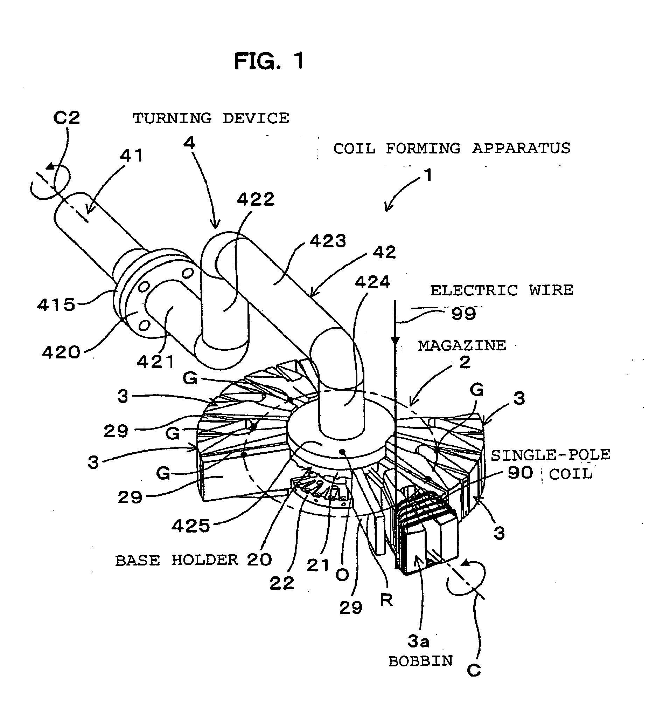

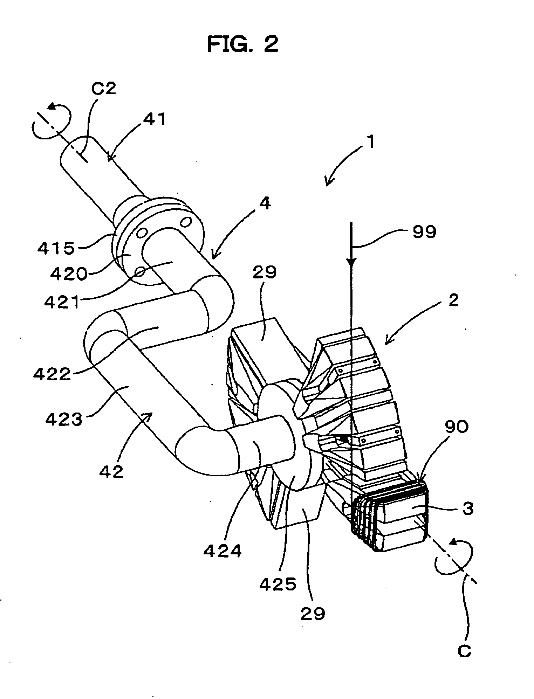

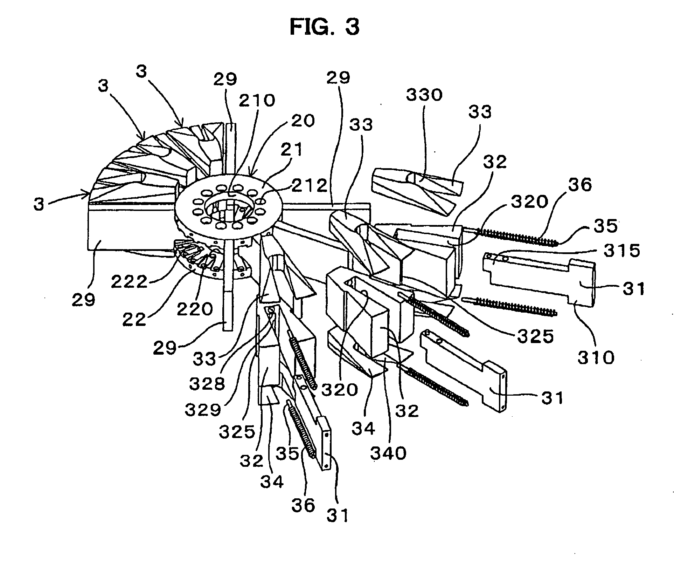

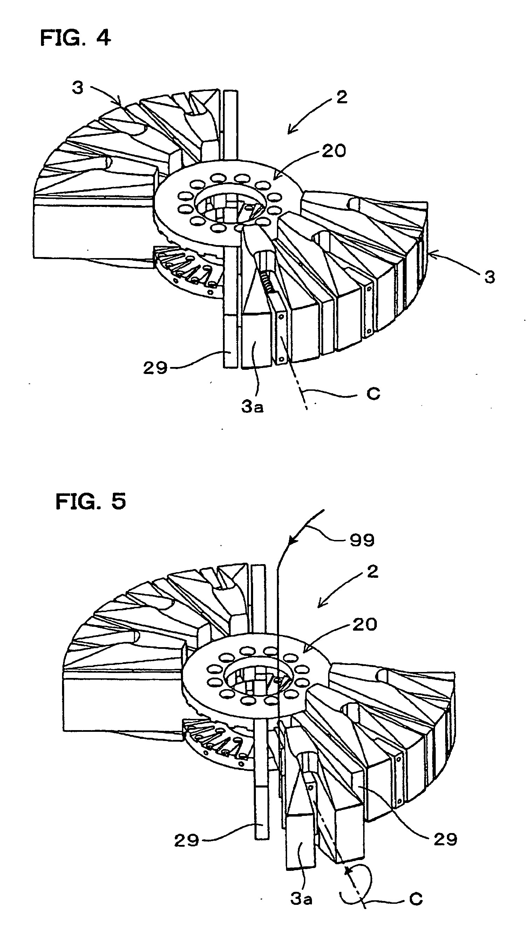

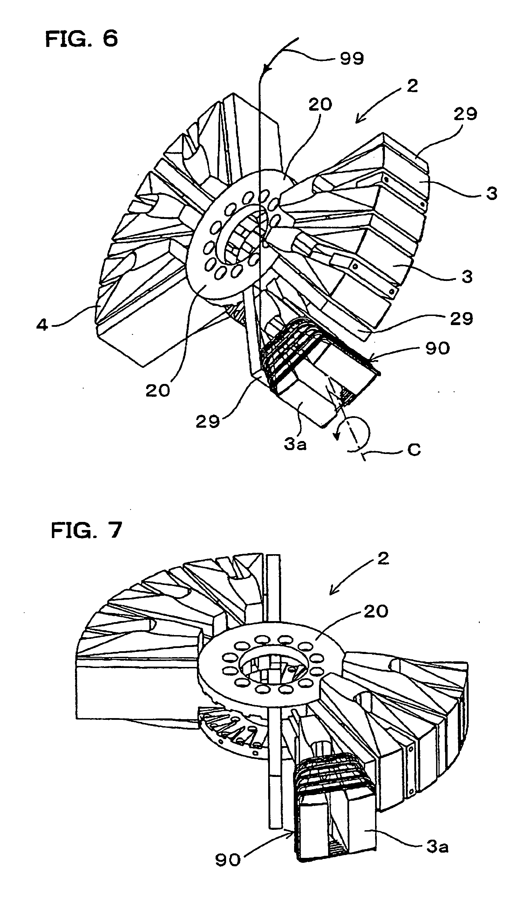

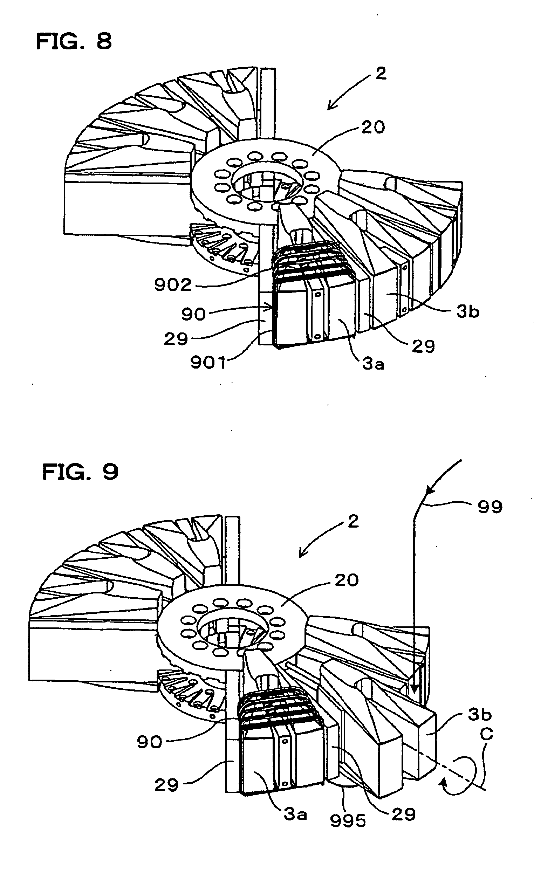

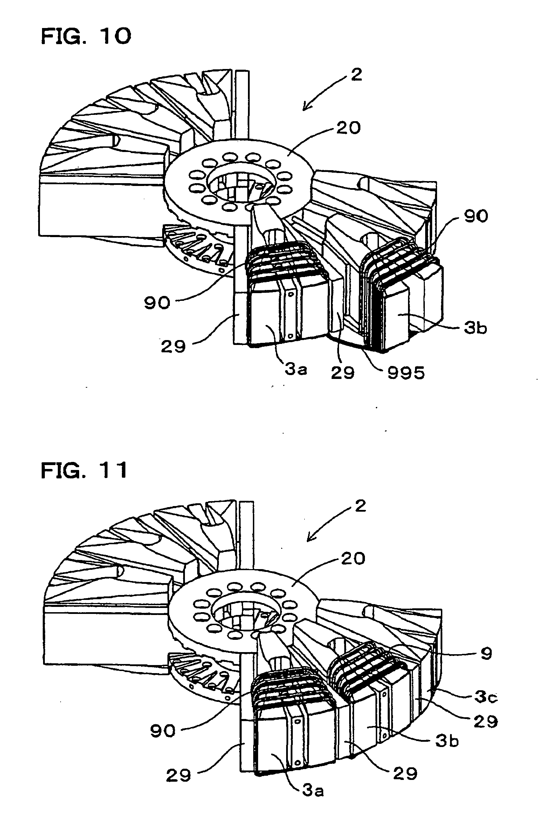

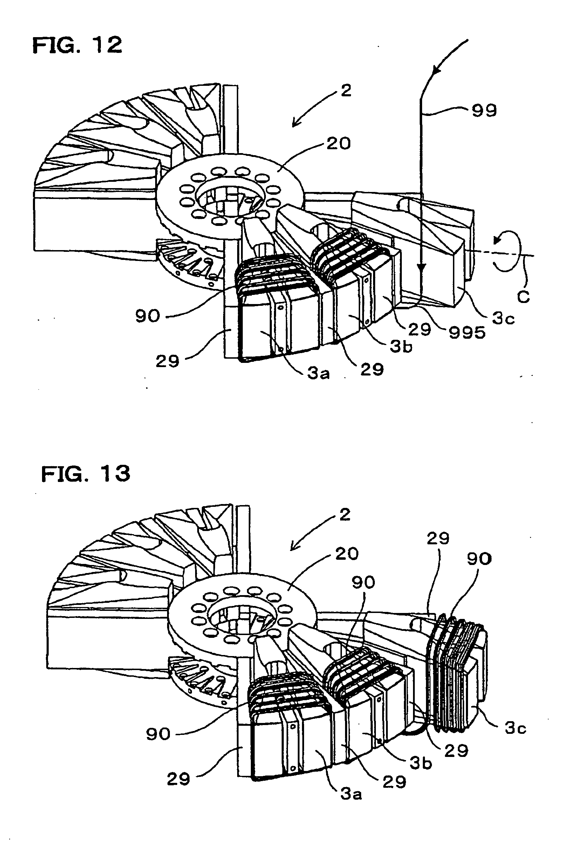

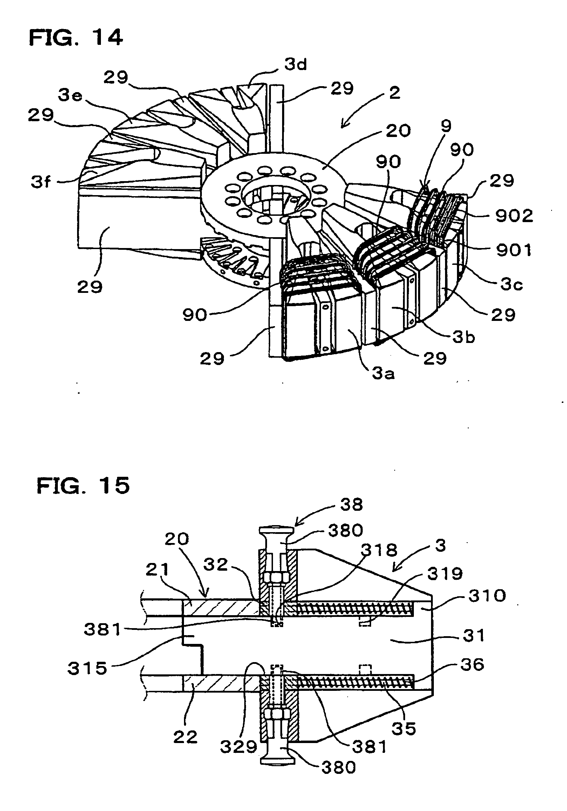

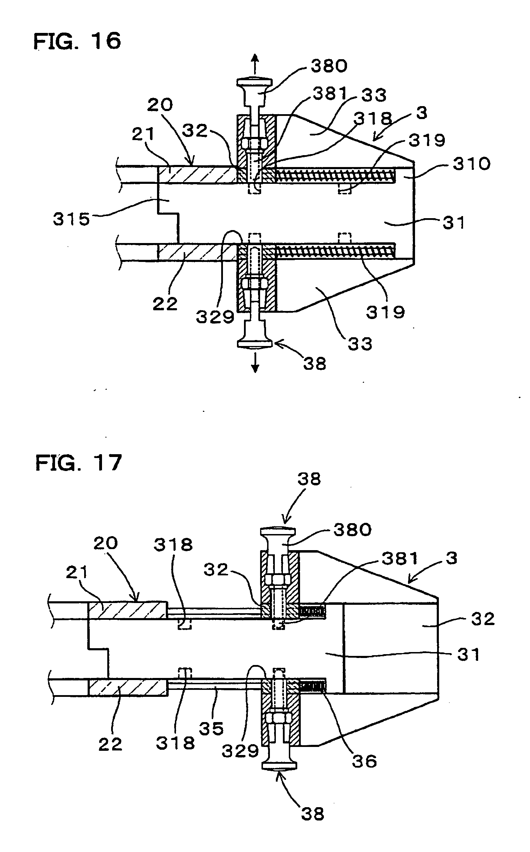

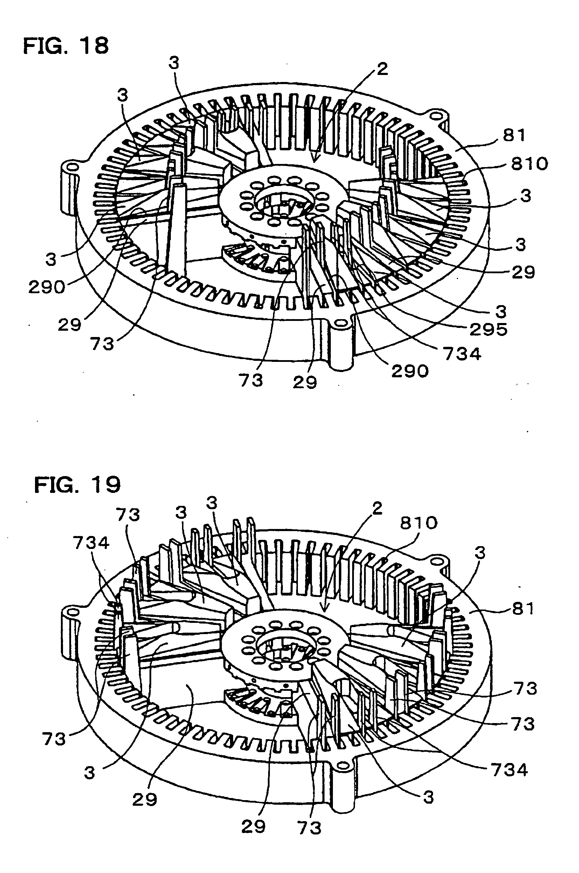

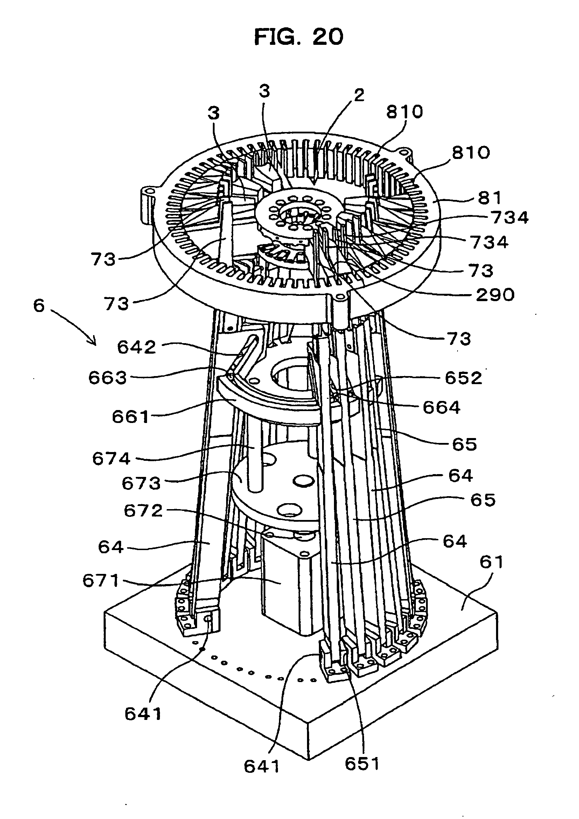

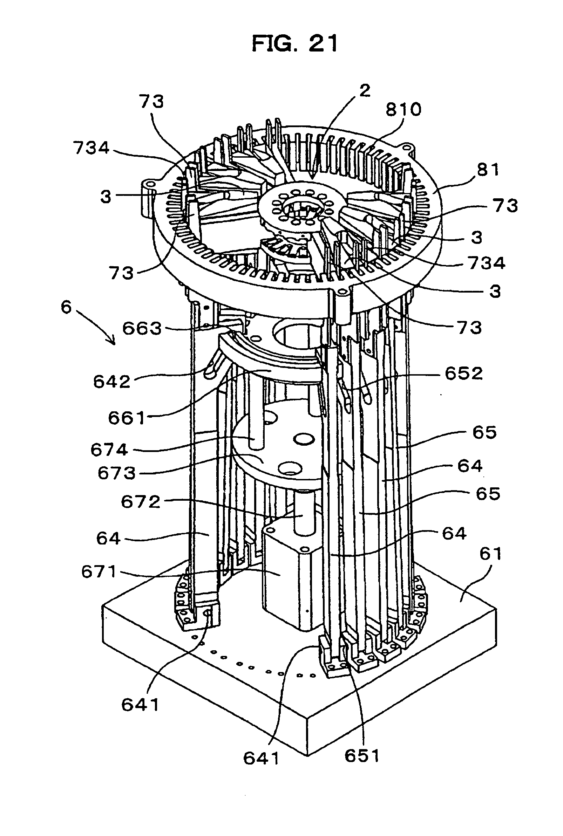

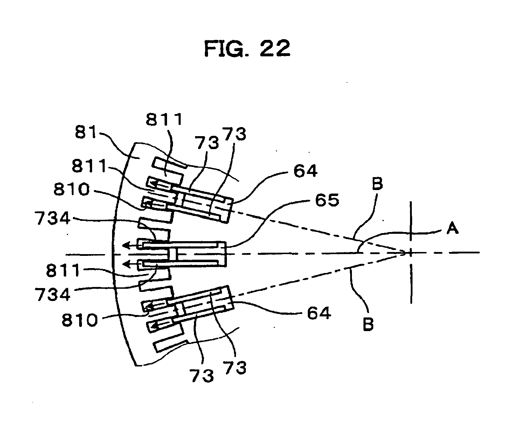

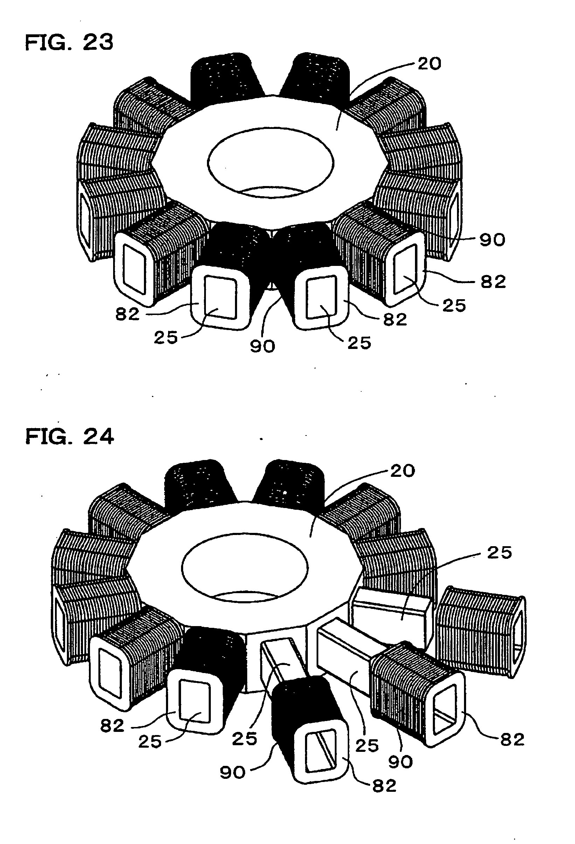

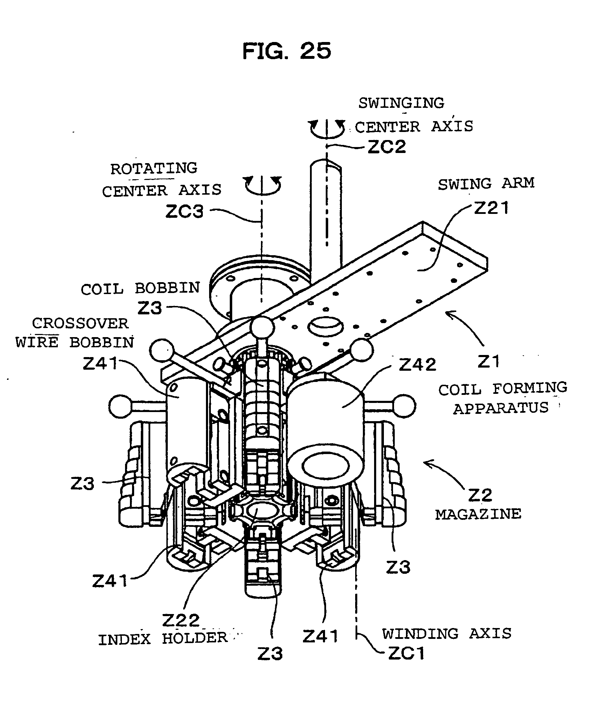

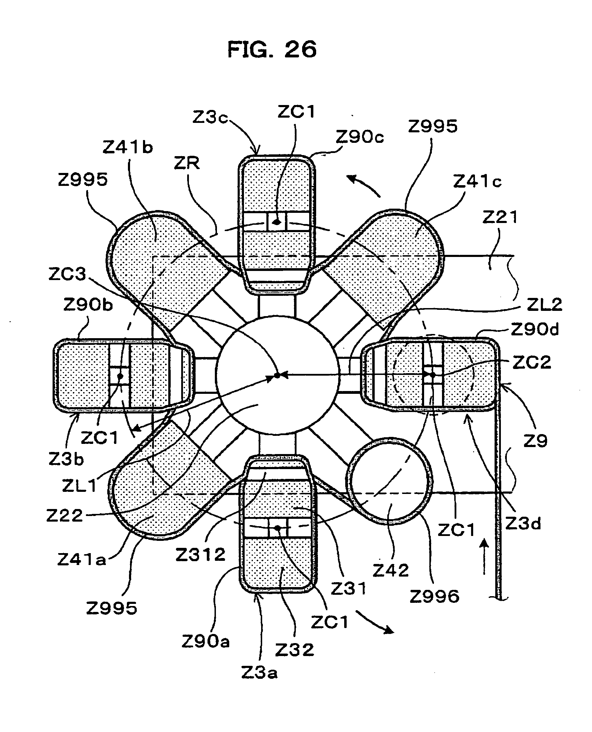

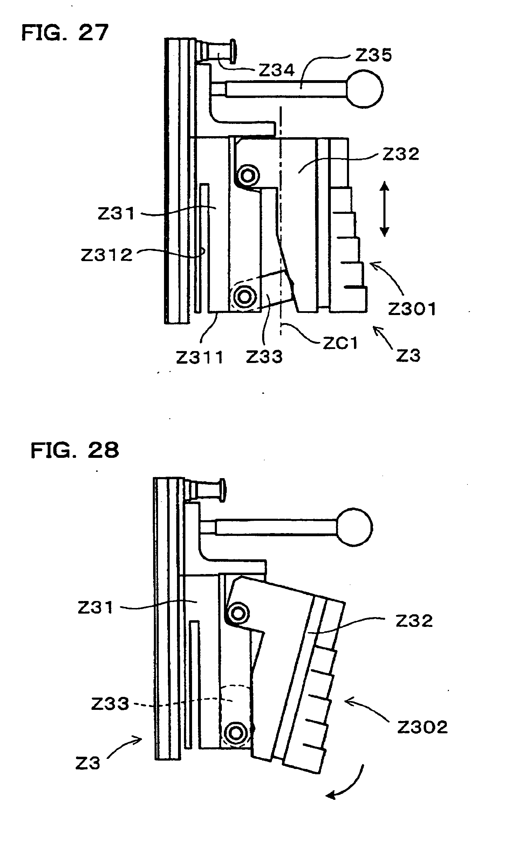

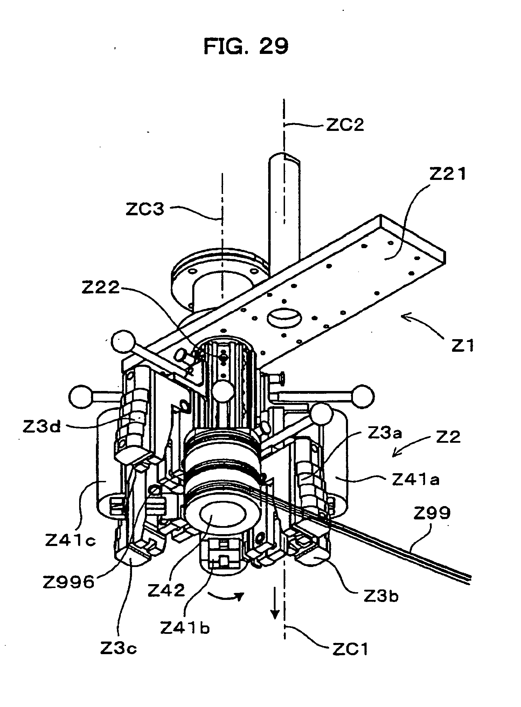

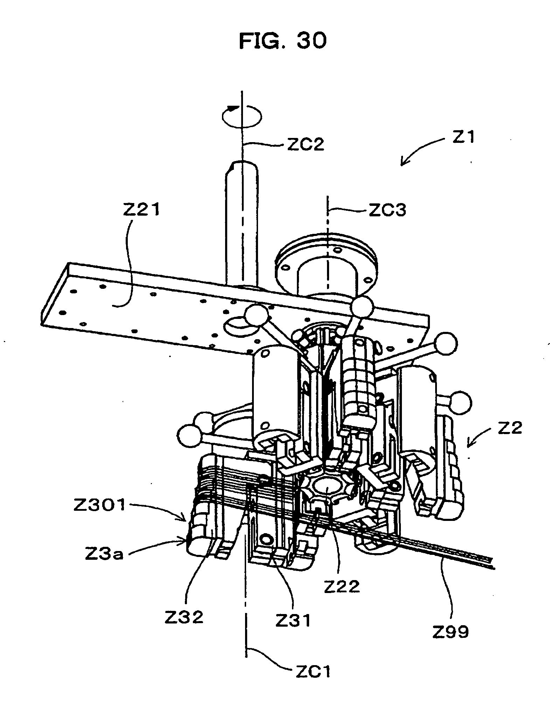

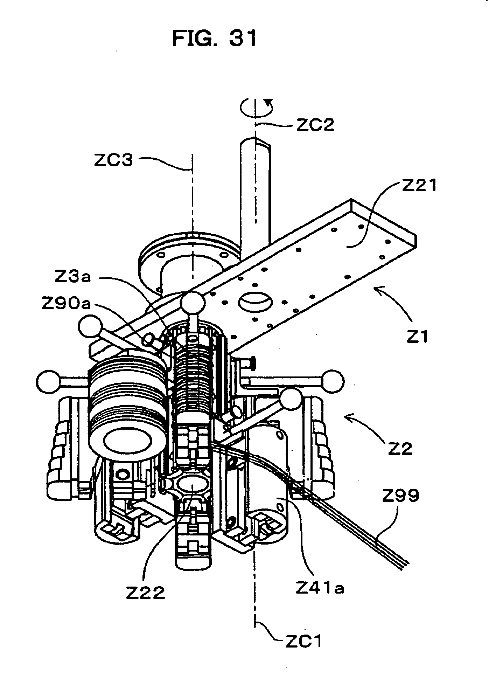

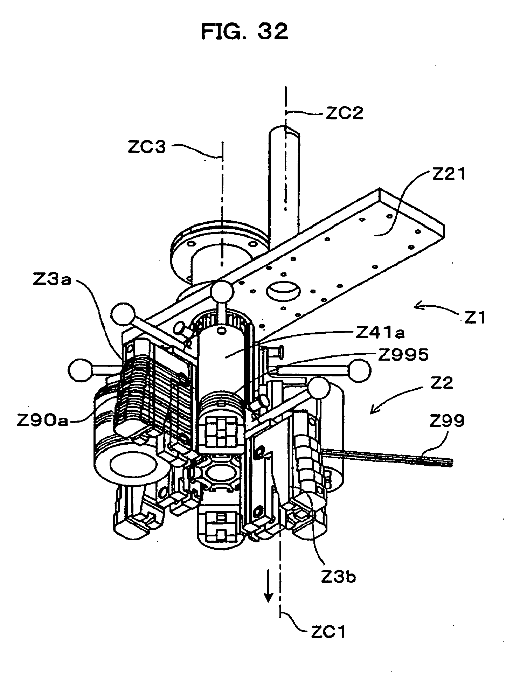

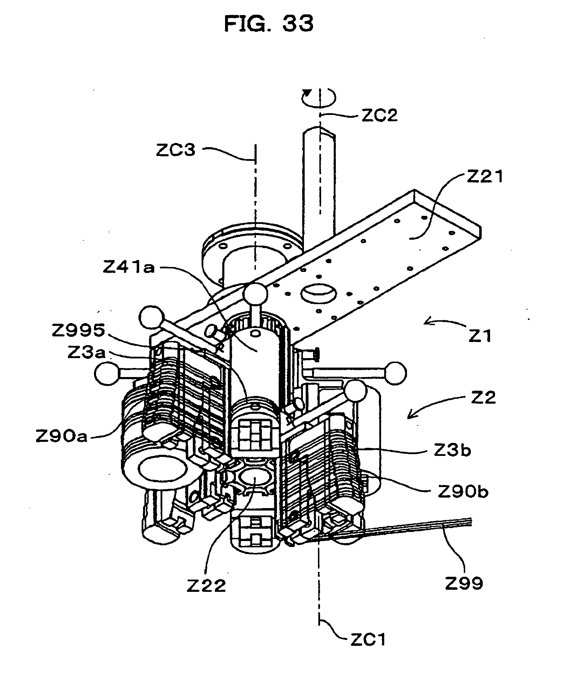

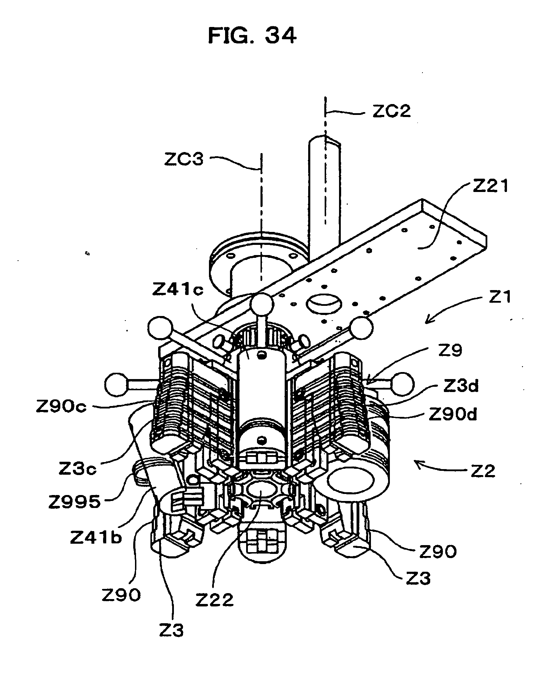

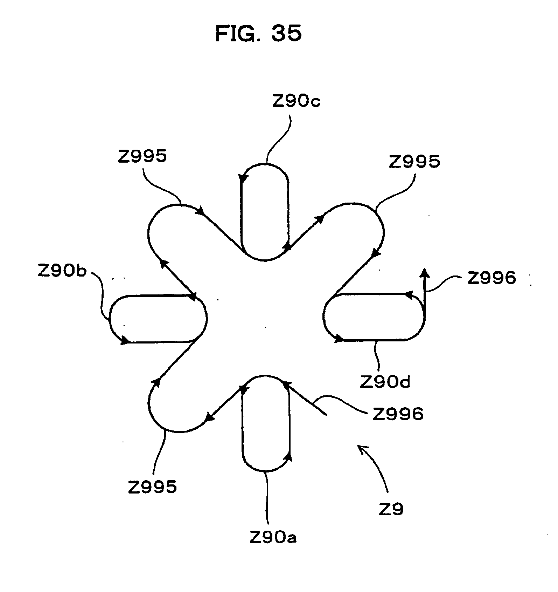

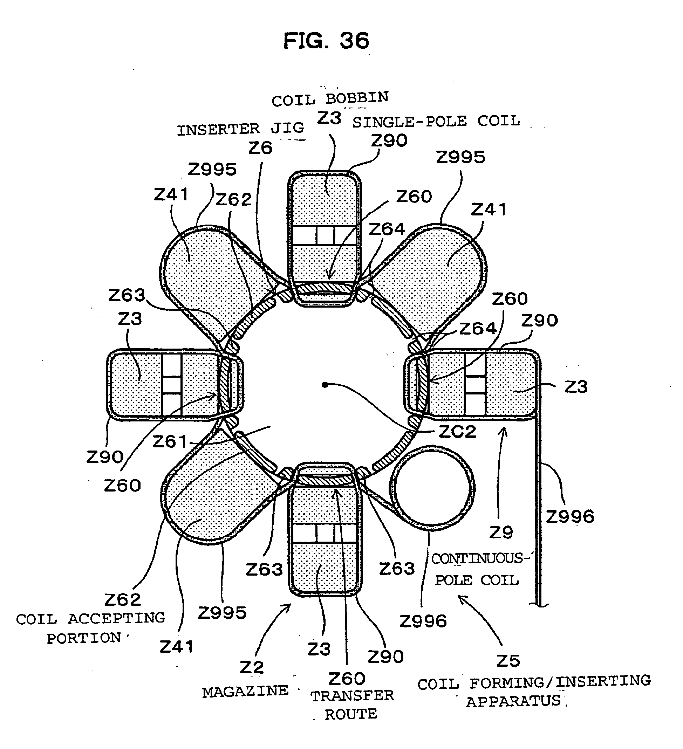

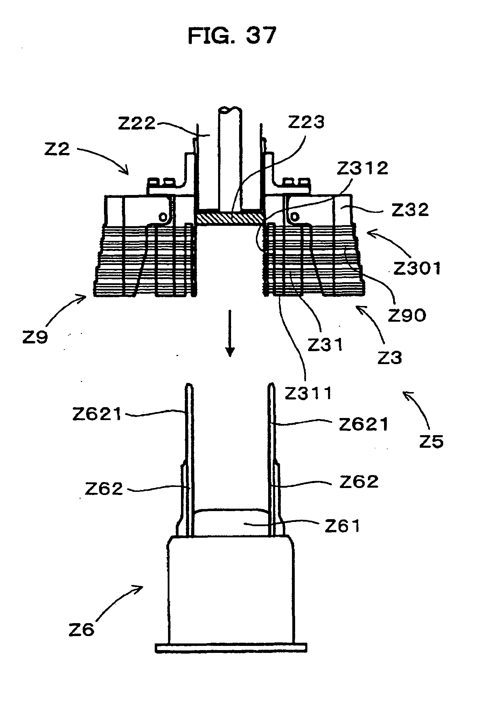

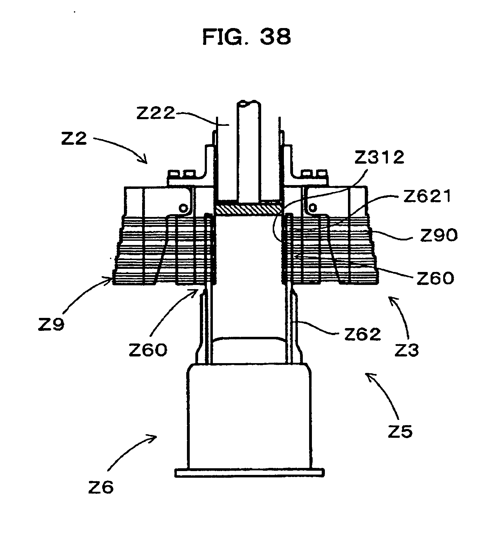

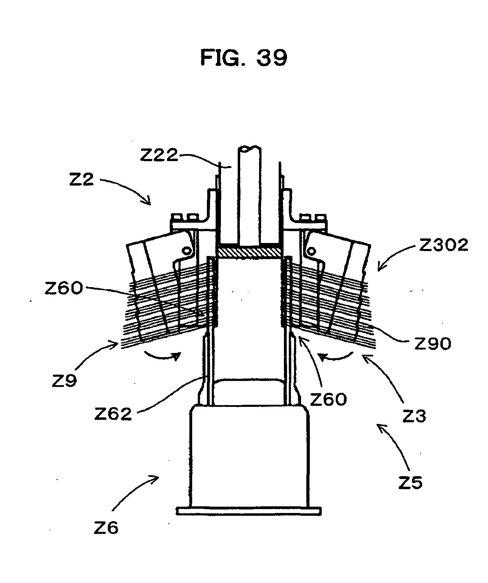

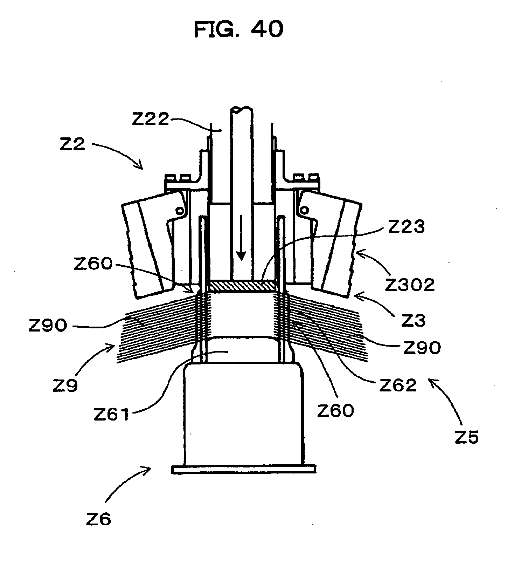

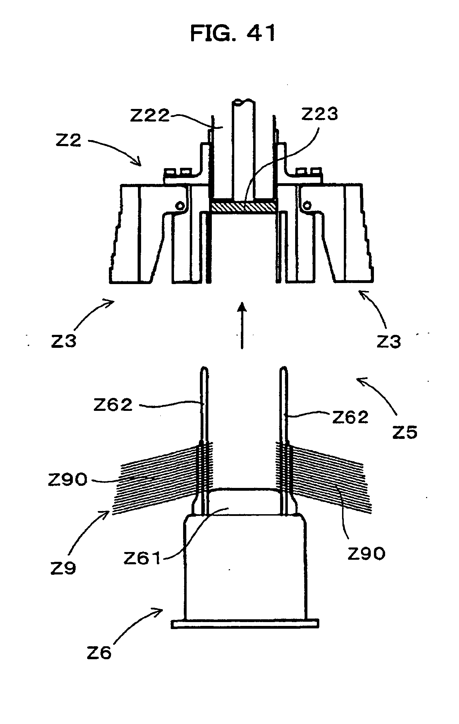

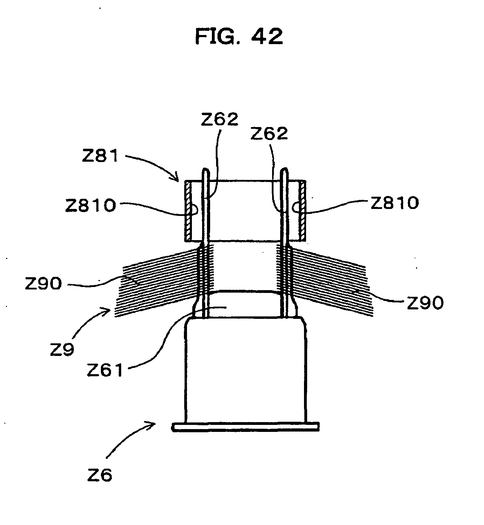

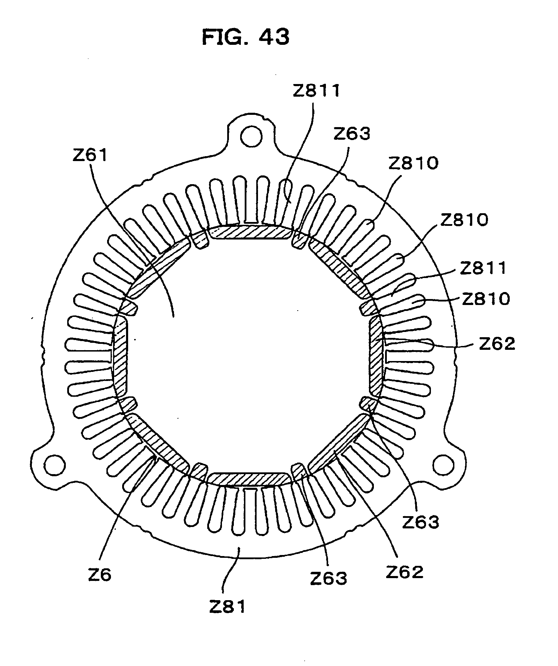

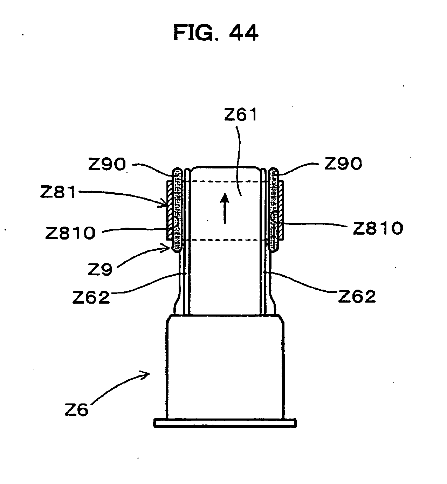

Fig. 1 is an explanatory view showing a construction of a coil forming apparatus of Embodiment 1; Fig. 2 is an explanatory view showing the state, in which a coil is being formed by the coil forming apparatus of Embodiment 1; Fig. 3 is an exploded explanatory view showing the structure of a magazine in Embodiment 1; Fig. 4 is an explanatory view showing the state of Embodiment 1, in which all the bobbins of the magazine are moved backward; Fig. 5 is an explanatory view showing the state of Embodiment 1, in which a first bobbin of the magazine is moved forward; Fig. 6 is an explanatory view showing the state of Embodiment 1, in which the magazine is rotated on the axis of a first bobbin to wind an electric wire; Fig. 7 is an explanatory view showing the state of Embodiment 1, in which the winding of the electric wire around the first bobbin is completed; Fig. 8 is an explanatory view showing the state of Embodiment 1, in which the first bobbin is moved backward; Fig. 9 is an explanatory view showing the state of Embodiment 1, in which a second bobbin of the magazine is moved forward; Fig. 10 is an explanatory view showing the state of Embodiment 1, in which the magazine is rotated on the axis of the second bobbin to complete the winding of the electric wire; Fig. 11 is an explanatory view showing the state of Embodiment 1, in which the second bobbin is moved backward; Fig. 12 is an explanatory view showing the state of Embodiment 1, in which a third bobbin of the magazine is moved forward; Fig. 13 is an explanatory view showing the state of Embodiment 1, in which the magazine is rotated on the axis of the third bobbin to complete the winding of the electric wire; Fig. 14 is an explanatory view showing the state of Embodiment 1, in which the third bobbin is moved backward; Fig. 15 is an explanatory view showing a structure in Embodiment 1 for fixing a bobbin at a back position; Fig. 16 is an explanatory view showing the state of Embodiment 1, in which the positioning pins of a bobbin are disengaged from a guide plate; Fig. 17 is an explanatory view showing a fixing structure in Embodiment 1 at a fore position of the bobbin; Fig. 18 is an explanatory view showing the state of Embodiment 2, in which a magazine is arranged in a stator core; Fig. 19 is an explanatory view showing the state of Embodiment 2, in which insertion blades and provisional shaping blades inserted into the magazine are moved forward; Fig. 20 is a perspective view showing a coil inserting apparatus in Embodiment 3; Fig. 21 is an explanatory view showing the state of Embodiment 3, in which insertion blades and provisional shaping blades in the coil inserting apparatus are moved forward; Fig. 22 is an explanatory view showing the forward directions of the insertion blades and the provisional shaping blades in Embodiment 3; Fig. 23 is a perspective explanatory view showing the state of Embodiment 4, in which single-pole coil forming bobbins are attached to the projections of a base holder to form single-pole coils; Fig. 24 is a perspective explanatory view showing the state of Embodiment 4, in which some of the single-pole coil forming bobbins having the single-pole coil wound thereon are removed from the projections of the base holder; Fig. 25 is a perspective view showing a coil forming apparatus of Embodiment 5; Fig. 26 is a perspective view showing the state of the coil forming apparatus of Embodiment 5, in which the individual single-pole coils are formed on the individual coil bobbins to form a continuous-pole coil; Fig. 27 is an explanatory view showing each bobbin in Embodiment 5 in the state, in which an outer bobbin portion takes a winding position; Fig. 28 is an explanatory view showing the bobbin in Embodiment 5 in the state, in which the outer bobbin portion takes a releasing position; Fig. 29 is a perspective view showing the coil forming apparatus of Embodiment 5 in the state, in which a first coil bobbin is substantially aligned at its winding axis with the swinging center axis of a swing arm and is protruded farther than the remaining all bobbins; Fig. 30 is a perspective view showing the coil forming apparatus of Embodiment 5 in the state, in which the first coil bobbin is being wound with an electric wire to form a single-pole coil; Fig. 31 is a perspective view showing the coil forming apparatus of Embodiment 5 in the state, in which a first crossover bobbin is substantially aligned at its winding axis with the swinging center axis of the swing arm and is protruded farther than the remaining all bobbins so that the first crossover bobbin is being wound with the electric wire; Fig. 32 is a perspective view showing the coil forming apparatus of Embodiment 5 in the state, in which a second coil bobbin is substantially aligned at its winding axis with the swinging center axis of a swing arm and is protruded farther than the remaining all bobbins; Fig. 33 is a perspective view showing the coil forming apparatus of Embodiment 5 in the state, in which the second coil bobbin is being wound with an electric wire to form a single-pole coil; Fig. 34 is a perspective view showing the coil forming apparatus of Embodiment 5 in the state, in which all the bobbins are wound with the electric wire to form a continuous-pole coil in Embodiment 5; Fig. 35 is an explanatory view schematically showing the state, in which all the bobbins are wound with the electric wire to form the continuous-pole coil; Fig. 36 is an explanatory top plan view showing a coil forming/inserting apparatus of Embodiment 6 in the state, in which a continuous-pole coil is being transferred from a magazine to an inserter jig; Fig. 37 is an explanatory view showing the coil forming/inserting apparatus of Embodiment 6 in the state, in which the magazine for holding the continuous-pole coil is moved forward to the inserter jig; Fig. 38 is an explanatory view showing the coil forming/inserting apparatus of Embodiment 6 in the state, in which the distal end of the coil accepting portion of the inserter jig is fitted in the fitting recess of the coil bobbin of the magazine; Fig. 39 is an explanatory view showing the coil forming/inserting apparatus of Embodiment 6 in the state, in which the outer bobbin portion of each coil bobbin of the magazine is moved to a releasing position to release the single-pole coil from the coil bobbin; Fig. 40 is an explanatory view showing the coil forming/inserting apparatus of Embodiment 6 in the state, in which a push-out core of the magazine is moved forward to push the continuous-pole coil to a regulating position in the inserter jig; Fig. 41 is an explanatory view showing the coil forming/inserting apparatus of Embodiment 6 in the state, in which the magazine is moved backward from the inserter jig; Fig. 42 is an explanatory view showing the coil forming/inserting apparatus of Embodiment 6 in the state, in which each coil accepting portion of the inserter jig confronts the inner circumference of a stator core; Fig. 43 is an explanatory top plan view showing the coil forming/inserting apparatus of Embodiment 6 in the state, in which the individual coil accepting portions and the individual guides of the inserter jig confront the inner circumference of the stator core; and Fig. 44 is an explanatory top plan view showing the coil forming/inserting apparatus of Embodiment 6 in the state, in which the continuous-pole coil is inserted and arranged from the inserter jig in the individual slots of the stator core.

### BEST MODE FOR CARRYING OUT THE INVENTION

### Embodiment 1

A coil forming method and a coil forming apparatus according to an embodiment of the invention will be described with reference to Fig. 1 to Fig. 17.

As shown in Fig. 1 and Fig. 2, a coil forming apparatus 1 of this embodiment is an apparatus for forming a motor coil 9 (as referred to Fig. 14) composed of three contiguous single-pole coils 90 having an electric wire 99 wound thereon in a loop shape. The coil forming apparatus 1 is constructed to include a magazine 2 and a turning device 4.

As shown in Fig. 1 to Fig. 3, the magazine 2 is provided with a base holder 20 and a plurality of bobbins 3 arranged on the outer circumference of the base holder 20. These bobbins 3 are arranged to move to and from the base holder 20 and are constructed such that any one bobbin 3 can be protruded farther than the remaining ones.

As shown in Fig. 1 and Fig. 2, the turning device 4 is constructed to turn the magazine 2 as a whole on an axis C in the forward or backward direction of the protruded bobbin 3.

The coil forming apparatus 1 will be described in more detail in the following.

In the magazine 2, as shown in Fig. 3, the base holder 20 has a disc shape. Specifically, the base holder 20 have a pair of upper and lower ring-shaped plates 21 and 22, which are provided with central through holes 210 and 220 and a plurality of positioning holes 212 and 222 around the through holes, respectively. These central through holes 210 and 220 and positioning holes 212 and 222 are provided for determining the engaging position with the later-described turning device 4.

Moreover, the paired upper and lower ring-shaped plates 21 and 22 are connected to each other through separate plates 29, which are arranged in directions radially extending from their centers. In this embodiment, four separate plates 29 are arranged at a pitch of an internal angle of 30 degrees, and other four separate plates 29 are also arranged at an opposite position at the pitch of the internal angle of 30 degrees. Moreover, the bobbins 3 are individually arranged in the spaces of the internal angle of about 30 degrees interposed between the adjoining separate plates 29. In this embodiment, six bobbins 3 in total are provided by arranging the three adjoining ones individually at the opposite positions.

As shown in Fig. 3, the magazine 2 of this embodiment is so constructed that the separate plates 29 and the bobbins 3 can be additionally arranged at vacant positions on the outer circumference of the disc-shaped base holder 20 so that it can be provided with the twelve bobbins 3 at the maximum.

As shown in Fig. 3, on the other hand, the bobbins 3 are arranged to move forward or backward along the axes, which radially extend from the center point of the base holder 20. Moreover, each bobbin 3 has a sector shape to become wider along the axis.

As shown in Fig. 3, more specifically, each bobbin 3 has a bobbin body 32, which is formed into a general sector shape in its entirety when viewed from a front face and a back face taken in parallel with the ring-shaped plates 21 and 22 of the base holder 20 and which is provided with a cutout 320 at its central portion. Moreover, the bobbin body 32 is provided on its two side faces with steps 325 for positioning the single-pole coil 90 when this coil 90 is formed.

On the front face and the back face of the bobbin body 32, on the other hand, there are removably arranged shaping blocks 33 and 34 for shaping the single-pole coil to be wound. These shaping blocks 33 and 34 also have a general sector shape and are provided with cutouts 330 and 340 at their central portions. Here, the shaping blocks 33 and 34 are fixed on the bobbin body 32 by driving the not-shown screws.

Moreover, the shaping blocks 33 and 34 in the embodiment are made the thicker the closer to the inner circumference from the outer circumference, as shown in Fig. 3, so that the single-pole coil to be formed may have the larger height the closer to the inner circumference.

As shown in Fig. 3, on the other hand, the bobbin body 32 has a rectangular through hole 329 in the axial direction from the cutout 320 to the base holder 20. Above and below this through hole 329, moreover, there are formed circular through rod holes 328. By fixing a guide plate 31 through the through hole 329 in the base holder 20, moreover, the bobbin 3 is arranged to move forward or backward in the base holder 20.

As shown in Fig. 3, more specifically, the guide plate 31 is provided with a proximal end 315 to be fixed in the base holder 20, and a distal end 310 enlarged vertically in size generally into a T-shape for regulating the fore position of the bobbin 3. Moreover, the proximal end 315 of the guide plate 31 is inserted into the through hole 319 opened in the bottom of the cutout 320 of the bobbin body 32, and rods 35 carrying springs 36 are inserted into the rod holes 328, which are formed above and below the through hole 329 of the bobbin body 32. Then, the distal end 315 of the guide plate 31 is clamped and fixed between the paired upper and lower ring-shaped plates 21 and 22 of the base holder 20, and the two rods 35 are fixed at their one-side ends in the ring-shaped plates 21 and 22 and at their other side ends on the distal ends 310 of the guide plate 31. As a result, the bobbin 3 is fixed to move forward or backward along the axis extending radially from the center point of the base holder 20.

As shown in Fig. 15 to Fig. 17, on the other hand, the bobbin 3 is provided at its upper and lower portions with positioning pins 38, which are enabled to move pin distal ends 381 forward or backward by pinching pin heads 380. Moreover, the guide plate 31 is provided with pin holes 318 and 319, which can engage with the pin distal ends 381. With the pin distal ends 381 of the positioning pins 38 engaging with the pin holes 318, as shown in Fig. 15, the bobbin 3 is kept in the state where the bobbin 3 has moved backward close to the base holder 20. In case the bobbin 3 is to be moved forward, on the other hand, the positioning pins 38 are moved backward to release the engaging state between the pin distal ends 381 and the pin holes 318 so that the bobbin 3 is moved forward against the springs 36. As shown in Fig. 17, moreover, the positioning pins 38 are moved forward again to bring their pin distal ends 381 into engagement with the pin holes 319. As a result, the bobbin 3 is moved forward in the axial direction so far in its axial direction that it is fixed at the position apart from the base holder 20.

On the two sides of each of the bobbins 3 thus arranged, there exist the separate plates 29, which are extended from the outer circumference of the base holder 20. Moreover, predetermined spacings are held to function as the later-described coil retaining grooves between the separate plate and the bobbins 3.

In the magazine 2 of this embodiment, on other hand, the contour, which is formed by the distal ends of all the bobbins 3 being moved backward, has a circular shape around the center point of the base holder 20. In other words, the magazine 2 of this embodiment is shaped such that it can arrange the individual bobbins 3 confronting the inner circumference of the later-described stator core.

Next, the turning device 4 of this embodiment is provided, as shown in Fig. 1 and Fig. 2, with a straight portion 41 extended from the not-shown drive shaft, and a flexible joint 42 connected to the straight portion 41 through flanges 415 and 420. The flexible joint 42 is provided at its distal end with a connection flange 425 to be connected to the magazine 2.

As shown in Fig. 1 and Fig. 2, the flexible joint 42 is composed of: a first portion 421 extending coaxially with the straight portion 41; a second portion 422 bent by 90 degrees and extended from the first portion; a third portion 423 bent by 90 degrees from the second portion 422 and extended in parallel with the straight portion 41; and a fourth portion 424 bent by 90 degrees from the third portion 423. The aforementioned connection flange 425 is arranged at the distal end of the fourth portion 424.

The connection flange 425, as shown in Fig. 1 and Fig. 2, is so positionally adjusted that the center points of the base holder 20 of the magazine 2 in the thickness direction and in the diameter direction may line on the axis of the straight portion 41 in case the connection flange 425 is connected to the base holder 20 of the magazine 2.

Moreover, the fixed position of the connection flange 425 in the circumferential direction of the magazine 2 can be suitably varied at a position where the axis c of the bobbin 3 is aligned with the center C2 of turns of the straight portion 41 of the turning device 4.

With reference to Fig. 4 to Fig. 14, here will be described a method for forming motor coils 9 having the single-pole coils 90 adjoining each other, by the coil forming apparatus 1 including the magazine 2 and the turning device 4 thus far described. Here, the turning device 4 is omitted from those Figures.

With all the bobbins 3 in the magazine 2 being moved backward, as shown in Fig. 4, the magazine 2 is so fixed at first on the turning device 4 that the turning center C2 (as referred to Fig. 1 and Fig. 2) of the turning device 4 is aligned with the axis C of the first bobbin 3a.

Next, a bobbin protruding step is performed by moving the first bobbin 3a forward to protrude farther than the remaining bobbins 3, as shown in Fig. 5. At this time, the bobbin 3a is released from the fixed state, in which the bobbin 3a has been fixed at the back position by the positioning pins 38 (Fig. 15 to Fig. 17), and is moved forward against the springs 36. The bobbin 3a is fixed again at the fore position by the positioning pins 38.

The electric wire 99 is then fed downward in one direction, as shown in Fig. 5, and its leading end is fixed on the magazine 2. The fixing method may fix the wire at a predetermined position by using a special fixing device or may be a method for binding the wire at an arbitrary position of the magazine 2. The latter method is adopted in this embodiment.

Next, a winding or coiling step is performed, as shown in Fig. 5 and Fig. 6, by feeding the electric wire 99 in one direction to the protruded bobbin 3a and by driving the turning device 4 to turn the magazine 2 as a whole around the axis C of the bobbin 3a. As a result, the electric wire 99 is wound on the protruded bobbin 3a, as shown in Fig. 7, to complete the formation of the first single-pole coil 90.

Next, a bobbin retracting step is performed, as shown in Fig. 8, to retract the first bobbin 3a having the single-pole coil 90. At this time, the bobbin 3a is fixed again at the back position by operating the positioning pins 38 (Fig. 15 to Fig. 17).

As shown in Fig. 8, the single-pole coil 90 formed around the bobbin 3a is exposed at its end portions 902, as located at the upper and lower portions of its loop, exposed to the front and back sides of the bobbin 3a, and is housed at its insertion portions 901, as located at the right and left portions, in the clearances between the separate plate 29 and the bobbin 3a.

Next, a second bobbin 3b adjoining the first bobbin 3a having the single-pole coil 90 is moved forward along the axis C and is protruded farther than the remaining bobbins 3, as shown in Fig. 9. The second bobbin 3b is then fixed like before at the fore position.

Before or after this bobbin protruding step, the engaging positions of the magazine 2 and the turning device 4 are changed to align the turning center of the turning device 4 and the axis of the second bobbin 3b.

As shown in Fig. 9, moreover, a crossover wire 995 leading from the single-pole coil 90 held by the first bobbin 3a is turned over below the second bobbin 3b, and the succeeding electric wire 99 is fed like before downward in one direction.

Next, the winding step is performed by feeding the electric wire 99 in one direction to the protruded bobbin 3b and by turning the magazine 2 as a whole around the axis C of the bobbin 3b, as shown in Fig. 9 and Fig. 10. The turning direction at this time is reversed from that of the case of the first bobbin 3a. As a result, the electric wire 99 is wound on the protruded bobbin 3b, as shown in Fig. 10, to complete the formation of the second single-pole coil 90 whose winding direction is opposite to that of the first single-pole coil 90.

Next, the second bobbin 3b having the single-pole coil 90 is moved backward and is fixed like before at the back position, as shown in Fig. 11.

As shown in Fig. 11, the second single-pole coil 90 formed around the bobbin 3b is also exposed at its end portions 902, as located at the upper and lower portions of its loop, to the front and back sides of the bobbin 3b, and is housed at its insertion portions 901, as located at the right and left portions, in the clearances between the separate plate 29 and the bobbin 3b.

Next, a third bobbin 3c adjoining the second bobbin 3b is moved forward along the axis C and is protruded farther than the remaining bobbins 3, as shown in Fig. 12. The third bobbin 3c is then fixed like before at the fore position. In this case, too, before or after this bobbin protruding step, the engaging positions of the magazine 2 and the turning device 4 are changed to align the turning center C2 (in Fig. 1 and Fig. 2) of the turning device 4 and the axis C of the third bobbin 3c.

As shown in Fig. 12, moreover, the electric wire 99 subsequent to the crossover wire 995 extending from the single-pole coil 90 held by the second bobbin 3b is fed like before downward in one direction.

Next, the winding step is performed by feeding the electric wire 99 in one direction to the protruded bobbin 3c and by turning the magazine 2 as a whole around the axis C of the bobbin 3c, as shown in Fig. 12 and Fig. 13. The turning direction at this time is reversed from that of the case of the second bobbin 3b. As a result, the electric wire 99 is wound on the protruded bobbin 3c, as shown in Fig. 13, to complete the formation of the third single-pole coil 90.

Next, the third bobbin 3c having the single-pole coil 90 is moved backward and is fixed like before at the back position, as shown in Fig. 14.

As shown in Fig. 14, the coil insertion portion 901 of the single-pole coil 90 formed around the bobbin 3c is also housed in the clearances between the separate plate 29 and the bobbin 3.

As a result, the coil 9 is completed with the three single-pole coils 90 adjoining each other in the alternately reversed winding directions.

Next, three bobbins 3d to 3f, as opposed to the three bobbins 3a to 3c having the aforementioned coil 9, can also be subjected to a procedure like before thereby to form the coil 9, in which the three single-pole coils 90 adjoin each other in the alternately reversed winding directions, as shown in Fig. 14.

The magazine 2 in this embodiment is constructed to wind the electric wire 99 by protruding such one of the three bobbins 3 farther than the remaining two as to be wound. Moreover, the bobbins 3 can be individually protruded separately of the remaining ones. Still moreover, the bobbins 3 are so arranged in the base holder 20 that they may move without their axes C aligned.

Moreover, the magazine 2 is so constructed to wind the electric wire 99 that the axes C of the individual bobbins 3 are sequentially brought close to the turning center C2 of the magazine 2. Still moreover, the bobbins 3 are so arranged on the base holder 20 that a virtual line R joining the centers G of gravity of the bobbins 3 may form a generally circular shape and that the axes C of the individual bobbins 3 may be radial outward from the center O of the generally circular virtual line R (as referred to Fig. 1).

In this embodiment, moreover, the winding bobbin 3 was fed with the electric wire 99, and the magazine 2 was turned as a whole around the axis C of the bobbin 3 or around the line substantially parallel to the axis to wind the electric wire 99 on the bobbin 3 being protruded farther than the remaining bobbins 3, thereby to form the single-pole coils 90 so that the motor coil 9 could be formed. Moreover, the winding operation of the electric wire 99 could be performed by bringing the axis C of the bobbin 3 to be wound with the electric wire 99, sequentially close to the turning center C2 of the magazine 2.

The actions and effects of this embodiment will be described in the following.

In the coil forming method of this embodiment, there are used the magazine 2 of the structure composed of the base holder 20 and the bobbins 3, and the turning device 4. Moreover, the bobbin protruding step, the winding step and the bobbin retracting step are performed sequentially for the individual bobbins.

Here, the winding step is performed by turning the magazine as a whole around the axis c of the protruded bobbin 3. Therefore, the electric wire 99 can be fed in one direction so that the single-pole coil 90 can be formed on the bobbin 3 without twisting the electric wire 99.

Moreover, the winding step follows the bobbin protruding step and is followed by the bobbin retracting step. Specifically, the bobbin 3 to be subjected to the winding step can be changed by moving it forward and backward at the bobbin protruding step and at the bobbin retracting step. This makes it unnecessary to prepare any special space for feeding the electric wire between adjoining bobbins 3. This makes it possible to make the length of the crossover wire 995 sufficiently small between the single-pole coils 90 obtained.

In this embodiment, moreover, each bobbin 3 of the magazine 2 is formed into the general sector shape and is provided with the shaping blocks 33 and 34 on its front face and back face. These shaping blocks 33 and 34 are made thicker inward. Therefore, the single-pole coil 90 wound on the bobbin 3 has its electric wire loops changed in shape along the axis C of the bobbin 3.

Specifically, the electric wire loops composing the single-pole coil 90 become wider outward along the sector-shaped bobbin 3 and lower along the shapes of the shaping blocks 33 and 34. As a result, the coil end portion 902 at the time when the coil is mounted in the stator core can be arranged in the optimum state, as will be described hereinafter.

In the winding magazine 2 of this embodiment, moreover, the contour formed of the distal ends of all the retracted bobbins 3 has the circular shape so that the individual bobbins 3 can be positioned to confront the inner circumference of the later-described stator core.

Between the two sides of each bobbin 3, moreover, there exist the separate plates 29, which are extended from the outer circumference of the base holder 20. The clearances between the separate plates 29 and the bobbin 3 function as coil retaining grooves 290. Here, these coil retaining grooves 290 adjoining across the separate plate 29 are substantially parallel to each other. Moreover, the individual single-pole coils 90 can be mounted on the stator core by the linear movements along those coil retaining grooves 290, as will be described in Embodiment 2.

### Embodiment 2

This embodiment presents one example of the method for inserting the motor coils formed by using the coil forming apparatus 1 of Embodiment 1, directly into the stator core from the magazine 2.

In this embodiment, the motor coils 9 (as referred to Fig. 14) are inserted and arranged in slots 810 formed in the inner circumference of a ring-shaped stator core 81, as shown in Fig. 18 and Fig. 19. Here in this embodiment, the motor coils 9 (or the single-pole coils 90) are omitted to clarify the motions of insertion blades 734 or the like, as will be described hereinafter.

The motor to be constructed of the stator core 81 is a three-phase DC brushless motor. Moreover, the stator core 81 in this embodiment is prepared by laminating ring-shaped electromagnetic steel sheets. The stator core 81 is provided in its inner circumference with the slots 810 for inserting the coils, as shown in Fig. 18 and Fig. 19.

In this embodiment, the stator core 81 is provided with the seventy two slots 810 for arranging the thirty six single-pole coils 90 in total. Moreover, the twelve single-pole coils 90 bear one pole individually. In this embodiment, two sets of motor coils 9 each having three adjoining single-pole coils 90 are prepared by one magazine 2 and are mounted together on the stator core 81. By performing these works six times, all the necessary single-pole coils 90 are mounted on the stator core 81.

These works are described in more detail. First of all, the magazine 2 is so arranged in the stator core 81, as shown in Fig. 18, that the coil retaining grooves 290 to be formed in the magazine 2 between the bobbin 3 and the separate plates 29 may confront the slots 810 of the stator core 81.

As shown in Fig. 18, moreover, insertion blades 73 are inserted into the coil retaining grooves 290 of the magazine 2. Still moreover, the cutouts 320, which are formed in the bobbin bodies 32 of the bobbins 3 in the magazine 2, and the cutouts 330 and 340, which are formed in the upper and lower shaping blocks 33 and 34 (as referred to Fig. 3), provide provisional shaping grooves 295 for inserting the provisional shaping blades 734.

As shown in Fig. 19, the insertion blades 73 are moved forward in the coil retaining grooves 290 from the center toward the outer circumference. Simultaneously with this, the provisional shaping blades 734 are moved forward in the provisional shaping grooves 295 from the center toward the outer circumference. As a result, the single-pole coils 90 are pushed by the insertion blades 73 to move substantially linearly from the coil retaining grooves 290 to the slots 810 of the stator core 81. Moreover, the upper and lower coil end portions 910 (Fig. 14), as having swelled out from the stator core 81, in the single-pole coils 90 are pushed and deformed outward or provisionally shaped by the provisionally shaping blades 734.

These forward motions of the insertion blades 73 and the provisionally shaping blades 734 are performed simultaneously for all the six single-pole coils 90 so that these six coils 90 are simultaneously inserted into the slots 810 of the stator core 81.

Next, in this embodiment, a pair of upper and lower tools (although not shown) are used to perform a second provisional shaping. The formers are formed into a ring shape having such a shaping face on the side to confront the stator core 81 as to shape the coils into a desired shape. Specifically, each of the upper and lower formers has such a tapered shaping face that its inner circumference protrude toward the stator core 81. Moreover, the formers shape, when moved forward to the stator core 81, the motor coils 9 outward along the tapered shape of the shaping face.

On the other hand, the individual formers are provided with cutouts for preventing interference with the insertion blades 73 and the provisional shaping blades 734. Moreover, the formers can be pushed onto the stator core 81 while the insertion blades 73 and the provisional shaping blades 734 being moved forward.

The paired upper and lower formers thus constructed are individually moved forward from their upper and lower positions onto the stator core 81. As a result, the second provisional shaping is performed such that the coil end portions 902, as having swelled out from the upper and lower portions of the stator core 81, of the six single-pole coils 90 arranged in the stator core 81 may fall toward the stator core 81.

Next, in this embodiment, the coil forming apparatus 1 exemplified in Embodiment 1 is used to form two sets of motor coils 9 having the three adjoining single-pole coils 90 on the magazine 2. Then, the movement, provisional shaping and second provisional shaping of the motor coils 9 from the magazine 2 directly to the stator core 81 are performed like before. By repeating these works six times in total, the thirty six single-pole coils 90 in total are mounted on the stator core 81. Moreover, the final shaping to be performed as the second provisional one by the formers is carried out for all the thirty six single-pole coils 90 so that it is the proper one for shaping the motor coils as a whole.

Thus, the thirty six single-pole coils 90 in total are inserted and arranged in the stator core 81.

Here, the step of forming the six single-pole coils to the second provisional shaping step are performed in a series of works in this embodiment and are repeated six times. However, the efficiency could be enhanced by using a plurality of sets of magazines 2. By increasing the number of the bobbins 3 in the magazine 2 from six to twelve, moreover, the twelve single-pole coils 90 could also be transferred all at once to the stator core 81 thereby to rationalize the process.

In this embodiment, as has been described hereinbefore, the so-called "linear insertion method" of moving the coils linearly can be executed easily and stably by utilizing the magazine 2 and the insertion blades 73 thus far described. In short, the single-pole coils 90 can be linearly inserted into the slots 810 without any position change. This makes it unnecessary to make the vertical length of the motor coils 9 more than necessary.

In this embodiment, moreover, the motor coil can be transferred directly from the bobbins 3 having formed it to the stator core 81, as described above. After the coils were formed. moreover, they need not be transferred from the bobbins to another coil transfer machine so that the coils can be mounted remarkably efficiently on the stator core. This is because the magazine 2 has an excellent structure, as has been described in detail in connection with Embodiment 1.

Moreover, the motor coils can be inserted from the magazine 2 directly into the stator core 81 so that the coil transfer can be easily executed even if the crossover wires joining the single-pole coils 90 are short.

### Embodiment 3

As shown in Fig. 20 to Fig. 22, Embodiment 2 presents a detailed example of a coil inserting apparatus to be used when the coils are to be inserted from the magazine 2 into the stator core 81.

The coil inserting apparatus 6 is provided on a bottom plate 61, as shown in Fig. 20 and Fig. 21, with a plurality of first arms 64 arranged to rock on fulcrums 641, and a plurality of second arms 65 arranged to rock on fulcrums 651. As shown in Fig. 20 and Fig. 22, each first arm 64 carries the two insertion blades 73 at its upper end, and each second arm 65 carries the two provisional shaping blades 734 at its upper end.

The first arm 64 is provided with a slot 642, which can engage with a pin 663 embedded on a lifting plate 661. The second arm 65 is also provided with a slot 652, which can engage with a pin 664 embedded on the lifting plate 661.

Moreover, this lifting plate 661 is connected to a cylinder 671, a lifting rod 672, a base plate 673, a connecting rod 674 and so on, which are arranged over the bottom plate 61. Thus, the lifting plate 661 can be moved upward and downward as the lifting rod 672 driven by the cylinder 671 moves upward and downward.

On the other hand, the slots 642 and 652 formed in the first arms 64 and the second arms 65 are provided with slope slot portions. As the engagements between the pins 663 and 664 and the slots 642 and 652 come out of position as the pins 663 and 664 move vertically, the first arms 64 and the second arms 65 rock on the fulcrums 641 and 651. Here, the slots 642 of the first arms 64 and the slots 652 of the second arms 65 are so slightly modified in shape that the first arms 64 and the second arms 65 are given different rocking strokes.

As shown in Fig. 22, moreover, the two insertion blades 73 are arranged in parallel at each first arm 64 so that they move together in parallel with the rocking direction of the first arm 64. Here, the rocking directions of all the first arms 64 are along the radial directions A extending through the centers of teeth 811, which are positions between the two slots 810 of the stator core 81.

Likewise, the two provisional shaping blades 734 are arranged in parallel at each second arm 65 so that they move together in parallel with the rocking direction of the second arm 65. Here, the rocking directions of all the second arms 65 are along the radial directions B extending through the centers of teeth 811, which are positioned between the two slots 810 of the stator core 81.

By using the coil inserting apparatus having the construction thus far described, the linear transfers of the coils 9 (or the single-pole coils 90) directly from the magazine 2 to the stator core 81 can be easily realized. Therefore, the aforementioned actions and effects can be reliably manifested.

### Embodiment 4

This embodiment uses the aforementioned magazine 2 to form the motor coil 9 to be used in a stator of a concentrated winding type.

The foregoing Embodiments 1 to 3 manufacture the stator of distributed winding type, in which the single-pole coils 90 wound with the electric wire 99 are distributed and arranged at the two or more slots 810 in the stator core 81. Moreover, the magazine 2 forms the coils 9 to be used in the stator of the distributed winding type.

In this embodiment, the coils 9 are formed like Embodiment 1 to manufacture the stator of the concentrated winding type, in which the single-pole coils 90 wound with the electric wire 99 are individually arranged in the teeth 811 positioned between the individual slots 810 of the stator core 81.

In this embodiment, as shown in Fig. 23 and Fig. 24, the magazine 2 is provided with a plurality of projections 25, which are formed on the outer circumference of the base holder 20. A plurality of single-pole coil forming bobbins 82 are mounted as the bobbins on those projections 25.

Like before, the magazine 2 is turned in its entirety around the axis C of the bobbin 82 in the winding operation, as shown in Fig. 23, to form the single-pole coils 90 on each bobbin 82. After this, as shown in Fig. 24, the bobbin 82 having the single-pole coils 90 formed thereon is removed from the base holder 20 and is assembled with the teeth 81 of the stator core 81 so that the stator of the concentrated winding type can be manufactured.

### Embodiments 5 and 6

With reference to Fig. 25 to Fig. 35, Embodiment 5 will be described in connection with a coil forming apparatus Z1 for forming a continuous-pole coil Z9, and a coil forming process for forming the continuous-pole coil Z9 from an electric wire Z99.

With reference to Fig. 36 to Fig. 44, on the other hand, Embodiment 6 will be described in connection with a coil forming/inserting apparatus Z5 provided with a bobbin Z2 and an inserter jig Z6, and further in connection with a coil transfer step of transferring the continuous-pole coil Z9 retained in the magazine Z2, once to the inserter jig Z6, and a coil inserting step of inserting and arranging the continuous-pole coil Z9 from the inserter jig Z6 in the individual slots Z810 of a stator core Z81.

Moreover, Embodiment 5 will be described on the coil forming apparatus and the coil forming method, and Embodiment 6 will be described on the coil forming/inserting apparatus and the coil forming/inserting method.

On the other hand, the magazine Z2 to be used in Embodiment 6 is identical to the magazine Z2 used in Embodiment 5, and Embodiment 6 may be described with reference to any of Fig. 25 to Fig. 35.

Here in Embodiments 5 and 6, the bobbin 3 in Embodiment 1 corresponds to a coil bobbin Z3. Moreover, the axis C of the bobbin 3 in Embodiment 1 corresponds to the winding axis ZC1 of the coil bobbin Z3. Still moreover, the base holder 20 in Embodiment 1 corresponds to an index holder Z22. Furthermore, the motor coil 9 in Embodiment 1 corresponds to the continuous-pole coil Z9.

On the other hand, the turning device in Embodiment 1 corresponds to a swing device and a swing arm Z21. Moreover, the turning center C2 of the turning device in Embodiment 1 corresponds to the swinging center axis ZC2 of the swing arm Z21.

### Embodiment 5

As shown in Fig. 25 and Fig. 26, the coil forming apparatus Z1 of this embodiment forms the continuous-pole coil Z9 as a motor coil by continuously arranging a plurality of single-pole coils Z90 having the electric wire Z99 wound thereon in a loop shape. The coil forming apparatus Z1 is provided with: the (not-shown) frame; the swing arm Z21 arranged on the frame to swing around the swinging center axis ZC2 connected to the (not-shown) swinging device; and the magazine Z2. Moreover, this magazine Z2 is provided with the index holder Z22 arranged movably with respect to the swing arm Z21, and a plurality of coil bobbins Z3 arranged on the outer circumference of the index holder Z22.

On the other hand, the individual winding axes of the individual coil bobbins Z3 for winding the electric wire Z99 are substantially parallel not only to each other but also to the swinging center axis ZC2. Moreover, the coil forming apparatus Z1 is constructed to move the index holder Z22 thereby to bring the coil bobbins Z3 for winding the electric wire Z99, sequentially close to the swinging center axis ZC2.

This construction will be described in detail in the following.

Here in the magazine 2 of Embodiment 1, the index holder Z22 can rotate around the center axis of rotation ZC2, which is substantially parallel to the swinging center axis ZC2. The individual coil bobbins Z3 are so arranged on the index holder Z22 that the individual winding axes for winding the electric wire Z99 are directed normal to the rotating center axis ZC2. By rotating the index holder Z22, the directions of the winding axes ZC1 of the coil bobbins Z3 can be sequentially brought into substantial alignment with the direction of the swinging center axis ZC2.

As shown in Fig. 25 and Fig. 26, the index holder Z22 is arranged to rotate around such a rotating center axis ZC3 to the swing arm Z21 as is offset substantially in parallel with the swinging center axis ZC2. On the other hand, the individual coil bobbins Z3 are arranged so arcuately in the index holder Z22 as are at substantially equal distances from the rotating center axis ZC3.

On the other hand, a bobbin distance ZL1 from the rotating center axis ZC3 to the winding axis ZC1 in each of the coil bobbins Z3 is substantially equal to an offset distance ZL2 from the swinging center axis ZC2 of the swing arm Z21 to the rotating center axis ZC3 of the index holder Z22.

By rotating the index holder Z22 by a predetermined angle with respect to the swing arm Z21, moreover, the winding axes ZC1 of the coil bobbins Z3 for winding the electric wire Z99 can be sequentially aligned substantially with the swinging center axis ZC2. In this substantially aligned state, the electric wire Z99 can be wound.

Moreover, the continuous-pole coil Z9 having the arcuately continuous coils can be formed (as referred to Fig. 35) by the individual coil bobbins Z3 arranged in the arcuate shape.

As shown in Fig. 27, moreover, each coil bobbin Z3 is arranged to move toward and away from the swinging center axis ZC2 with respect to the index holder Z22. Moreover, the coil bobbin Z3 for winding the electric wire Z99 can be moved forward away from the swing arm Z21 with respect to the remaining coil bobbins Z3 so that it can be protruded from the remaining coil bobbins Z3. Therefore, the protruded coil bobbin Z3 can be easily fed with the electric wire Z99 in the direction perpendicular to the winding axis ZC1 thereby to facilitate the feed of the electric wire Z99 and the winding of the electric wire Z99 on the coil bobbin Z3.

As shown in Fig. 26, moreover, the individual coil bobbins Z3 are arranged in the arcuate shape on the outer circumference of the index holder Z22. In this embodiment, the individual coil bobbins Z3 are radially arranged at substantially equal spacings on the outer circumference of the index holder Z22. In this embodiment, moreover, the four coil bobbins Z3 are so arranged as to form the continuous-pole coil Z9 having the four continuous single-pole coils Z90.

As shown in Fig. 27 and Fig. 28, on the other hand, each coil bobbin Z3 is provided with an inner bobbin portion Z31 attached to the index holder Z22, and an outer bobbin portion Z32 arranged to confront the inner bobbin portion Z31. The outer bobbin portion Z32 can move to change the distance from the inner bobbin portion Z31 between a winding position Z301 at the time of winding the electric wire Z99, as shown in Fig. 27, and a releasing position Z302 at the time of releasing the single-pole coil Z90 after wound from the relevant coil bobbin Z3, as shown in Fig. 28. Moreover, the outer bobbin portion Z32 is diametrically enlarged stepwise in the forward direction away from the swing arm Z21.

When the outer bobbin portion Z32 is set at the winding position Z301, as shown in Fig. 27, it is possible to establish the state, in which the external diameter of the coil bobbin Z3 is stepwise enlarged in the forward direction. It is also possible to form the single-pole coil Z90 having the winding diameter of the electric wire Z99 enlarged in the forward direction, and to form the single-pole coil Z90 having a winding diameter of the normal size which is determined by the distance between the outer bobbin portion Z32 and the inner bobbin portion Z31.

Moreover, the continuous-pole coil Z9 composed of the individual single-pole coils Z90 can be inserted and arranged in the slots Z810 of the stator core Z81 such that its side of the larger winding diameter is positioned on the opening sides of the slots Z810 for the insertion and arrangement. Moreover, the coil end portions formed by the protrusions of the individual single-pole coils Z90 from the two axial end portions of the stator core Z81 can be made small by moving and deforming the positions on the opening sides outward of the stator core Z81. In other words, the individual single-pole coils Z90 are formed to have winding diameters enlarged from one side to the other side, so that the length of the single-pole coils Z90 can be brought to the necessary minimum to reduce the coil end portions.

When the outer bobbin portion Z32 is set at the releasing position Z302, as shown in Fig. 28, it is possible to establish the state, in which the external diameter of the coil bobbin Z3 is smaller in the forward direction. Moreover, the distance between the outer bobbin portion Z32 and the inner bobbin portion Z31 is reduced so that each single-pole coil Z90 can be easily released.

In this embodiment, as shown in Fig. 27 and Fig. 28, each coil bobbin Z3 is provided with a handle Z35, which is manually moved forward or backward so that the coil bobbin Z3 is fixed at the fore or back position. In addition, the forward or backward movement of each coil bobbin Z3 can also be performed by using a cylinder or motor.

In this embodiment, moreover, each coil bobbin Z3 is provided with a turnable cam Z33 at its inner bobbin portion Z31. The winding position Z301 is established when the cam Z33 is turned up toward the outer bobbin portion Z32, as shown in Fig. 27, and the releasing position Z302 is established when the cam Z33 is turned down toward the inner bobbin portion Z31, as shown in Fig. 28. In addition, the movement of the outer bobbin portion Z32 between the winding position Z301 and the releasing position Z302 can also be performed by using a cylinder or motor.

As shown in Fig. 25 and Fig. 26, on the other hand, the index holder Z22 is provided between the individual coil bobbins Z3 with crossover bobbins Z41 for winding crossover wires Z995 to join the individual single-pole coils Z90. In this embodiment, three crossover bobbins Z41 are individually arranged between the four coil bobbins Z3. By winding the electric wire Z99 around the crossover bobbins Z41, moreover, the crossover wires Z995 of a specified length can be formed (as referred to Fig. 35) between the single-pole coils Z90 formed around the coil bobbins Z3.

In this embodiment, as shown in Fig. 25 and Fig. 26, a lead bobbin Z42 is arranged between a first coil bobbin Z3a for winding the electric wire Z99 at first and a fourth coil bobbin Z3d for winding at last. The lead bobbin Z42 is provided for winding the electric wire Z99 to retain a lead wire Z996 of a predetermined length before the winding operation of the first coil bobbin Z3a. The lead wire Z996 means the electric wire Z99 leading to the winding end portion of a first single-pole coil Z90a to be formed in the first coil bobbin Z3a (as referred to Fig. 35).

In this embodiment, moreover, the lead bobbin Z42 has a generally circular section shape so that it can retain the lead wire Z996 of the predetermined length stably on the winding end portion of the first single-coil Z90a without folding or bending the electric wire Z99.

Like the aforementioned coil bobbins Z3, moreover, the crossover bobbins Z41 and the lead bobbin Z42 can also move forward to or backward from the swinging center axis ZC2 with respect to the index holder Z22. Therefore, the crossover bobbins Z41 and the lead bobbin Z42 can move in the forward direction away from the swing arm Z21 relative to the remaining coil bobbins Z3 and crossover bobbins Z41 so that they can protrude farther than the remaining coil bobbins Z3 and crossover bobbins Z41.

As shown in Fig. 25 and Fig. 26, the swing arm Z21 can swing both forward and backward around the swinging center axis ZC2. Moreover, this embodiment forms the continuous-pole coil Z9 having the four single-pole coils Z90 wound in the same direction. Therefore, the swinging directions of the swing arm Z21 for winding the coil bobbins Z3 and for winding the crossover bobbins Z41 are reversed, and the coil forming apparatus Z1 rotates alternately both forward and backward to form the continuous-pole coil Z9.

In the following, the swinging direction of the swing arm Z21 for winding the coil bobbins Z3 will be called "forward", and the swinging direction of the swing arm Z21 for winding the crossover bobbins Z41 and the lead bobbin Z42 will be called "backward".

On the frame, although not shown, there is arranged the swinging device for swinging the swing arm Z21 around its swinging center axis ZC2. This swinging center axis ZC2 is contained in the swinging device. In this embodiment, the swinging device can be manually swung by equipping the swing arm Z21 with a handle. In addition, the swinging device can also be exemplified by a variety of motors or index cylinders, which are actuated electrically, hydraulically or pneumatically.

Here will be described a coil forming process for forming the continuous-pole coil Z9 by using the coil forming apparatus Z1 thus far described.

In this coil forming process, the coil forming apparatus Z1 is used to perform the following index step, protruding step and winding step sequentially on the individual coil bobbins Z3 to form the single-pole coils Z90 and then the continuous-pole coil Z9 having the continuous single-pole coils Z90.

In the coil forming apparatus Z1, as shown in Fig. 25, at the initial position of the index holder Z22, the lead bobbin Z42 takes the position, at which it is the closest to the swinging center axis ZC2 in the swing arm Z21. At this initial position, the winding axis ZC1 in the lead bobbin Z42 is substantially aligned with the swinging center axis ZC2 in the swing arm Z21.

At a pretreatment step, the lead bobbin Z42 is formed forward to protrude farther than the individual coil bobbins Z3 and the individual crossover bobbins Z41. Then, the lead bobbin Z42 is fed with the electric wire Z99, and the swing arm Z21 is swung backward so that the lead bobbin Z42 is wound with the electric wire Z99 thereby to form the lead wire Z996 of the predetermined length.

The feed of the electric wire Z99 is performed transversely of the coil forming apparatus Z1, that is, in the direction normal to the winding faces of the individual coil bobbins Z3, the individual crossover bobbins Z41 and the lead bobbin Z42 for winding the electric wire Z99.

Next, at the aforementioned index step, as shown in Fig. 29, the index holder Z22 is rotated by a predetermined angle to bring the winding axis ZC1 of the first coil bobbin Z3a into substantial alignment with the swinging center axis ZC2.

At the aforementioned protruding step, moreover, the first coil bobbin Z3a is moved forward to protrude, and the lead bobbin Z42 is moved backward.

As shown in Fig. 30, on the other hand, at the aforementioned winding step, the first coil bobbin Z3a is fed with the electric wire Z99, and the swing arm Z21 is swung forward so that the first coil bobbin Z3a is wound with a plurality of turns of the electric wire Z99 thereby to form the first single-pole coil Z90a. On the other hand, the outer bobbin portion Z32 of the first coil bobbin Z3a takes the aforementioned winding position Z301 so that the external diameter of the first coil bobbin Z3a is stepwise enlarged in the forward direction. Thus, it is possible to form the single-pole coil Z90 having a winding diameter enlarged in the forward direction.

Next, as shown in Fig. 31, the index step is performed again to rotate the index holder Z22 by a predetermined angle to bring the winding axis ZC1 of a first crossover bobbin Z41a into substantial alignment with the swinging center axis ZC2. At the protruding step, moreover, the first crossover bobbin 42a is moved forward to protrude, and the first coil bobbin Z3a is moved backward.

Next at the crossover wire forming step, the first crossover bobbin Z41a is fed with the electric wire Z99, and the swing arm Z21 is swung backward so that the first crossover bobbin Z41a is wound with the electric wire Z99 to form the crossover wire Z995.

Next, as shown in Fig. 32, the aforementioned index step is performed again to rotate the index holder Z22 by a predetermined angle to bring the winding axis ZC1 of the second coil bobbin Z3b into substantial alignment with the swinging center axis ZC2. At the protruding step, moreover, the second coil bobbin Z3b is moved forward to protrude, and the first crossover bobbin Z41a is moved backward.

As shown in Fig. 33, moreover, the aforementioned winding step is performed again to feed the first coil bobbin Z3a with the electric wire Z99, and the swing arm Z21 is swung forward so that the second coil bobbin Z3b is wound with a plurality of turns of the electric wire Z99 thereby to form a second single-pole coil Z90b.

From now on, as shown in Fig. 34, a second crossover bobbin Z41b and a third crossover bobbin Z41c are subjected like before to the aforementioned index step, protruding step and crossover wire forming step thereby to form the individual crossover wires Z995. A third coil bobbin Z3c and the fourth coil bobbin Z3d are also subjected to the aforementioned index step, protruding step and winding step thereby to form a third single-pole coil Z90c and a fourth single-pole coil Z90d.

Thus, the continuous-pole coil Z9 is formed to have the first to fourth single-pole coils Z90a to Z90d continued by the individual crossover wires Z995, as shown in Fig. 35. This treatment of the crossover wires Z995 is performed not by the operation to grip the electric wire with an external device but only in the treatment of the magazine Z2. During the treatment, the coils are wound around and restricted by the individual bobbins Z3a to Z3d, Z41a to Z41d and Z42 till all the poles are wound up. Fig. 35 is a diagram schematically showing the state, in which the individual single-pole coils Z90a to Z90d are formed around the first to fourth coil bobbins Z3a to Z3d, and in which the continuous-pole coil Z9 is formed all over the individual bobbins Z3a to Z3d, Z41a to Z41d and Z42. As seen with reference to Fig. 35 and Fig. 26, the individual bobbins Z3a to Z3d, Z41a to Z41d and Z42 are arranged such that the virtual line joining their centers of gravity may be generally circular. Therefore, the crossover wires are treated within the range contained by the individual coil bobbins Z3a to Z3d, namely, in the circumcircle of the individual coil bobbins Z3a to Z3d by arranging these coil bobbins Z3a to Z3d circumferentially adjacent to each other at like diametrical positions with respect to the index holder Z22 of the magazine Z2.

In this embodiment, like Embodiment 1, the magazine 2 is constructed to wind the electric wire 99 such that any coil bobbin 3 for the winding operation is protruded farther than the remaining coil bobbins 3, as shown in Fig. 25.

As shown in Fig. 26, on the other hand, the individual coil bobbins Z3 are so arranged with respect to the index holder Z22 that the virtual line ZR joining their individual winding axes ZC1 may be generally circular. Moreover, the bobbins Z3 are so arranged on the index holder Z22 that their individual winding axes ZC1 may be substantially parallel to each other.

In this embodiment, like Embodiment 1, the coil bobbin Z3 was fed with the electric wire Z99, and the magazine 2 was turned as a whole either around the winding axis ZC1 as the axis of the coil bobbin Z3 or around the line substantially parallel to the winding axis ZC1 to wind the electric wire Z99 on the coil bobbin Z3 being protruded farther than the remaining bobbins Z3, thereby to form the single-pole coils Z90 so that the continuous-pole coil Z9 could be formed as the motor coil 9. Moreover, the winding operation of the electric wire Z99 could be performed by bringing the winding axis ZC1 of the coil bobbin Z3 to be wound with the electric wire Z99, sequentially close to the swinging center axis ZC2 as the turning center of the magazine 2.

In the coil forming apparatus Z1, the coil bobbins Z3 are swung altogether by the swing arm Z21 so that the coil bobbin Z3 brought the closest to the swinging center axis ZC2 is wound with the electric wire Z99 thereby to form the single-pole coil Z90.

By swinging the swing arm Z21, moreover, the index holder Z22 and the coil bobbins Z3 carried on the swing arm Z21 are rotated altogether to wind the electric wire Z99. As a result, unlike the prior art, in which the electric wire Z99 is wound while the winder or the like is being rotated from the outer circumference of the bobbin fixed, the single-pole coil Z90 can be formed on the bobbin Z3 without substantially twisting the electric wire Z99.

By rotating the index holder Z22, moreover, the winding axes ZC1 of the coil bobbins Z3 for winding the electric wire Z99 can be sequentially brought into substantial alignment with the swinging center axis ZC2 of the swing arm Z21. Although the coil forming apparatus Z1 is provided with the plurality of coil bobbins Z3 for forming the continuous-pole coil Z9, therefore, the electric wire Z99 can be wound such that the coil bobbin Z3 for the winding operation is not seriously offset from the swinging center axis ZC2.

After the single-pole coil Z90 was formed on any coil bobbin Z3, the index holder Z22 can be rotated to form the single-pole coil Z90 like before such that the winding axis ZC1 of the next coil bobbin Z3 adjacent to that coil bobbin Z3 is substantially aligned with the swinging center axis ZC2.

As a result, the feed of the electric wire Z99 can be performed substantially in a predetermined direction perpendicular to the winding axis ZC1 of the coil bobbin Z3 for the winding operation, so that the electric wire Z99 can be stably wound on each coil bobbin Z3. Therefore, the single-pole coil Z90 having little twist can also be stably formed around any coil bobbin Z3, thereby to form the continuous-pole coil Z9 having little twist stably.

### Embodiment 6

As shown in Fig. 37, the coil forming/inserting apparatus Z5 of this embodiment is provided with: the magazine Z2 for forming the continuous-pole coil Z9 having the single-pole coils Z90 wound with the electric wire Z99 in the loop shape; and the inserter jig Z6 confronting the magazine Z2 for accepting the continuous-pole coil Z9 and inserting and arranging the continuous-pole coil Z9 in the slots Z810 formed in the inner circumference of the stator core Z81.

As shown in Fig. 36, the magazine Z2 is provided with the plurality of coil bobbins Z3, and the inserter jig Z6 is provided with a plurality of coil accepting portions Z62 for accepting the individual single-pole coils Z90 from the individual coil bobbins Z3.

As shown in Fig. 40, moreover, the coil forming/inserting apparatus Z5 is constructed to arrange the individual coil bobbins Z3 to confront the coil accepting portion Z62 so that the continuous-pole coil Z9 having the individual single-pole coils Z90 wound on the individual coil bobbins Z3 may be transferred from the magazine Z2 to the inserter jig Z6.

This construction will be described in detail in the following.

In the magazine Z2, as shown in Fig. 25 and Fig. 26, the coil bobbins Z3 for winding the electric wire Z99 to form the single-pole coils Z90 are arranged at substantially equal distances from the center point of the magazine Z2. In this magazine Z2, moreover, the individual winding axes ZC1 of the coil bobbins Z3 for winding the electric wire Z99 are arranged substantially parallel to each other.

As shown in Fig. 36 and Fig. 37, on the other hand, the inserter jig Z6 is provided with a push/insertion core Z61 for pushing and inserting the continuous-pole coil Z9 into the slots Z810 of the stator core Z81. Moreover, the coil accepting portion Z62 is arranged on the outer circumference of the push/insertion core Z61 for accepting the individual single-pole coils Z90 from the individual coil bobbins Z3.

In the coil forming/inserting device Z5, as shown in Fig. 36 and Fig. 38, each coil accepting portion Z62 is positioned to confront the distal end face Z311 of each coil bobbin Z3 in the direction of the winding axis ZC1, when the continuous-pole coil Z9 is to be transferred from the magazine Z2 to the inserter jig Z6. The coil bobbin Z3 and the coil accepting portion Z62 are connected to form a transfer route Z60 for transferring each single-pole coil Z90.

As shown in Fig. 27 and Fig. 36, moreover, each coil bobbin Z3 is provided in its distance end face with a fitting recess Z312 for fitting the distal end Z621 of each coil accepting portion Z62 in the inserter jig Z6. In this embodiment, the fitting recess Z312 is formed in the distal end face Z311 of each inner bobbin portion Z31 of each coil bobbin Z3.

As shown in Fig. 38, moreover, the fitting recess Z312 is made so deep as to insert and arrange the coil accepting portion Z62 in the entirety of the loops of the single-pole coil Z90 wound around the coil bobbin Z3. Specifically, the fitting recess Z312 is made deeper from the distal end face Z311 of each coil bobbin Z3 than the winding depth from the distal end face Z311 of each coil bobbin Z3 to the position for winding the electric wire Z99.

As shown in Fig. 36 and Fig. 38, moreover, the connection between each coil bobbin Z3 and each coil accepting portion Z62 can be made by fitting the distal end portion Z621 of each coil accepting portion Z62 in the fitting recess Z312 of each coil bobbin Z3. On the other hand, the transfer of the continuous-pole coil Z9 from the magazine Z2 to the inserter jig Z6 can be performed in that fitting state.

When this fitting is done, moreover, the distal end portion Z621 of each coil accepting portion Z62 is necessarily inserted and arranged in the loops of each single-pole coil Z90 in each coil bobbin Z3.

As shown in Fig. 36 and Fig. 37, moreover, the magazine Z2 is provided with a push-out core Z23, which is so arranged in the inner circumference of each coil bobbin Z3 as to move forward and backward thereby to push out the continuous-pole coil Z9 to the inserter jig Z6. This push-out core Z23 can push out, when moved forward (i.e., in the forward direction away from the swing arm Z21) to the side to confront the inserter jig Z6, each single-pole coil Z90 transferred to each coil accepting portion Z62, to a predetermined position in the inserter jig Z6, as shown in Fig. 40.

In this embodiment, as shown in Fig. 42, the predetermined position regulates the position of the continuous-pole coil Z9 when this continuous-pole coil Z9 is inserted and arranged in the slots Z810 of the stator core Z81 by the inserter jig Z6. After the continuous-pole coil Z9 was transferred to the inserter jig Z6, therefore, it can be inserted and arranged as it is in the slots Z810 of the stator core Z81.

As shown in Fig. 36, moreover, the inserter jig Z6 is provided with a plurality of guides Z63, which are so arranged between the individual coil accepting portions Z62 as are directed substantially in the same direction as the forming direction of the coil accepting portions Z62. As shown in Fig. 43, those guides Z63 confront teeth Z811 positioned between the individual slots Z810 of the stator core Z81 thereby to guide the insertion and arrangement of the continuous-pole coil Z9 in the individual slots Z810.

Between each guide Z63 and the individual coil accepting portions Z62 adjoining the two sides of the guide Z63, as shown in Fig. 36, there are formed insertion clearances Z64, which can insert the electric wires Z99 of the individual single-pole coils Z90. Each single-pole coil Z90 is prevented, when its electric wire Z99 is inserted into the insertion clearances Z64 and arranged in each coil accepting portion Z62, from being interlaced with the electric wire Z99 of the adjoining single-pole coil Z90. As a result, the electric wire Z99 of each single-pole coil Z90 can be reliably inserted and arranged in the slots Z810 of the stator core Z81.

As shown in Fig. 44, moreover, the push/insertion core Z61 can move toward and away from the individual coil accepting portions Z62. When the individual coil accepting portions Z62 and the individual guides Z63 are made to confront the inner circumference of the stator core Z81, the push/insertion core Z61 moves forward to the stator core Z81 so that the single-pole coils Z90 held in the individual coil accepting portions Z62 can be inserted and arranged in the individual slots Z810.

Here will be described the coil forming/inserting method, which performs: the coil transfer step of transferring the continuous-pole coil Z9 formed at the coil forming step explained in Embodiment 5, once to the inserter jig Z6; and the coil inserting step of inserting and arranging the continuous-pole coil Z9 from the inserter jig Z6 in the individual slots Z810 of the stator core Z81.

In this embodiment, the coil forming step is similar to that of Embodiment 5.

Here will be described the coil transfer step of transferring the continuous-pole coil Z9 formed at the coil forming step, from the magazine Z2 to the inserter jig Z6.

At this coil transfer step, as shown in Fig. 36, the continuous-pole coil Z9 is transferred from the magazine Z2 to the inserter jig Z6 by using the coil forming/inserting apparatus Z5 having the magazine Z2 and the inserter jig Z6.

At the coil transfer step, as shown in Fig. 37, the magazine Z2 having formed the continuous-pole coil Z9 is moved at first forward to the inserter jig Z6. At this time, at each coil bobbin Z3 in the magazine Z2, each outer bobbin portion Z32 is at the winding position Z301 so that a tension is applied to each single-pole coil Z90. Moreover, this single-pole coil Z90 is kept so that its state may not be broken.

As shown in Fig. 38, the distal end portion Z621 of each coil accepting portion Z62 of the inserter jig Z6 is fitted in the fitting recess Z312 of each coil bobbin Z3 of the magazine Z2. By this fitting operation, the coil bobbin Z3 and the coil accepting portion Z62 are connected to form each transfer route Z60 for transferring each single-pole coil Z90.

In the fitting operation, moreover, the distal end portion Z621 of each coil accepting portion Z62 is inserted and arranged in the entire loops of each single-pole coil Z90 in each coil bobbin Z3.

Next at a releasing step, as shown in Fig. 39, the outer bobbin portion Z32 of each coil bobbin Z3 is moved to the aforementioned releasing position Z302. At this time, the coil bobbin Z3 is diametrically reduced in the forward direction. As a result, the single-pole coil Z90 is released from the coil bobbin Z3.

Next, the push-out core Z23 of the magazine Z2 is moved forward to the inserter jig Z6, as shown in Fig. 40. At this time, the individual single-pole coils Z90 wound around the outer circumferences of the individual coil bobbins Z3 are pushed out altogether to the aforementioned regulating positions, at which they abut against the push/insertion cores Z61 of the inserter jigs Z6.

At this time, moreover, while each transfer route Z60 is being kept in the loops of each single-pole coil Z90, all the single-pole coils Z90 can be simultaneously transferred together with the crossover wires from each coil bobbin Z3 to the individual coil accepting portions Z62.

After this, the magazine Z2 is moved in the backward direction away from the inserter jig Z6, as shown in Fig. 41, so that the transfer of the continuous-pole coil Z9 having the continuous single-pole coils Z90 to the inserter jig Z6 is completed.

Here will be described the coil inserting step.

At this coil inserting step, as shown in Fig. 42 to Fig. 44, the continuous-pole coil Z9 retained in the inserter jig Z6 is inserted and arranged in the slots Z810 formed in the inner circumference of the stator core Z81.

At the coil inserting step, as shown in Fig. 42 and Fig. 43, the individual coil accepting portions Z62 of the inserter jig Z 6 are arranged at first to confront the inner circumference of the stator core Z81. At this time, the individual guides Z63 are arranged to confront the individual teeth Z811 between the individual slots Z810 in the inner circumference of the stator core Z81.

Next, the push/insertion core Z61 is moved forward to the stator core Z81, as shown in Fig. 44. At this time, the electric wires Z99 in the individual single-pole coils Z90 retained in the individual coil accepting portions Z62 are inserted and arranged in the individual slots Z810. As the distal end of the push/insertion core Z61 moves forward over the distal ends of the coil accepting portions Z62, moreover, the single-pole coils Z90 are inserted and arranged in the slots Z810 so that the continuous-pole coil Z9 can be assembled with the stator core Z81.

Thus, Embodiments 5 and 6 were executed to manufacture the stator in a three-phase motor composed of U-, V- and W-phases. In this embodiment, moreover, the magazine Z2 had the four coil bobbins Z3 and the three crossover bobbins Z41, and the inserter jig Z6 had the eight coil accepting portions Z62 and the eight guides Z63.

In the magazine Z2, moreover, the four-pole coil was formed as the continuous-pole coil Z9 having the four single-pole coils Z90 and was transferred to the inserter jig Z6. Then, the two four-pole coils were assembled from the inserter jig Z6 with the stator core Z81 thereby to form the U-phase composed of the eight-pole coil. For the V-phase and the W-phase, moreover, that assembly was made to form the eight-pole coil having the two four-pole coils.

In the coil forming/inserting apparatus Z5 thus constructed, the magazine Z2 can form the continuous-pole coil Z9 in the magazine Z2, can accept the individual single-pole coils Z90 reliably in the individual coil accepting portions Z62 and can transfer the single-pole coils Z90 as the continuous-pole coil Z9 to the inserter jig Z6.

Specifically, the magazine Z2 is provided with the coil bobbins Z3 and can form the single-pole coils Z90 around the individual coil bobbins Z3 thereby to form the continuous-pole coil Z9. As a result, it is possible to form the individual single-pole coils Z90 around the individual coil bobbins Z3 having their positional relations fixed, and to stabilize the lengths of the crossover wires Z995 to be formed between the single-pole coils Z90 wound around the coil bobbins Z3.

On the other hand, the inserter jig Z6 is provided with the individual coil accepting portions Z62, the distal ends Z621 of which are individually fitted in the fitting recesses Z312 of the individual coil bobbins Z3. These coil bobbins Z3 and coil accepting portions Z62 can form the transfer routes Z60 when they are connected to each other. When the individual single-pole coils Z90 are to be transferred from the coil bobbins Z3 to the coil accepting portions Z62, therefore, they can be reliably transferred along the transfer routes Z60 being retained in their loops.

Moreover, the individual single-pole coils Z90 can be accepted substantially simultaneously by the coil accepting portions Z62. At these acceptances, therefore, the winding order of the individual electric wires Z 99 around the single-pole coils Z90 is hardly different from that of the preceding winding operation. Specifically, the individual single-pole coils Z90 having their winding diameters enlarged from one side to the other side are not changed in their winding order when they are transferred to the inserter jig Z6, so that they can be transferred with the electric wires Z99 being array having no change in the winding order.

Therefore, the continuous-pole coil Z9 can be transferred from the magazine Z2 to the inserter jig Z6 without any substantial change in its formed state.

## Claims

1. A method for forming a motor coil having a plurality of continuous single-pole coils (90, Z90) wound with an electric wire (79, Z99) in a loop shape,
using a magazine (2, Z2) including a plurality of bobbins (3, Z3); and
in that a first one to be wound of said bobbins is wound with said electric wire by feeding it with said electric wire and by turning said magazine as a whole either around the axis of said bobbin or around a line generally parallel to said axis, thereby to form said single-pole coil, and in that said single-pole coil is subsequently formed around the remaining bobbins like said first bobbin thereby to form said motor coil, wherein the winding of said electric wire is performed such that the axes of the bobbins for winding said electric wire are sequentially brought close to the rotating center axis of said magazine, and
wherein the method is **characterized:**
**by** using a magazine including a base holder (20) and a plurality of bobbins so arranged on the outer circumference of said base holder that they can move relative to said base holder;
by comprising:
a bobbin protruding step of moving the first one of said bobbins to protrude farther than the remaining bobbins; and
a winding step of winding said first bobbin protruded with said electric wire to form the single-pole coil by feeding said first bobbin generally in one direction with the electric wire and by turning said magazine as a whole either around the axis of said first bobbin or around the center generally parallel to said axis; and
in that said bobbin protruding step and said winding step are sequentially performed on the adjoining bobbins to form said motor coil.

2. A coil forming method in Claim 1, **characterized in that** the winding of said electric wire is performed such that any one for the winding of said bobbins is performed such that it is protruded farther more than the remaining bobbins.

3. A coil forming method in any of Claims 1 to 2, **characterized in that** said bobbins are arranged to have their axes offset from each other to have no alignment.

4. A coil forming method in Claim 1, **characterized: in that** said bobbins are arranged to move forward or backward generally linearly in its axial direction so that one bobbin is moved forward at said bobbin protruding step to protrude farther than the remaining bobbins.

5. A coil forming method in Claim 4, **characterized: in that** the bobbin retracting step is performed after said winding step to move said bobbin having said single-pole coil backward.

6. A coil forming method in any of Claims 1, 4, or 5, **characterized: in that** said winding step is performed by reversing the turning direction of said magazine sequentially for each of said bobbins.

7. An apparatus for forming a motor coil having a plurality of continuous single-pole coils wound with an electric wire in a loop shape, comprising:
a magazine including a plurality of bobbins; and
a turning device (4) for turning said magazine as a whole either around the axis of any one of said bobbins for the winding or around a line generally parallel to said axis, wherein said magazine performs the winding of said electric wire such that the axes of the bobbins for winding said electric wire are sequentially brought close to the rotating center axis of said magazine, and
said magazine includes a base holder and a plurality of bobbins so arranged on the outer circumference of said base holder that they can move relative to said base holder so that any one of said bobbins may protrude farther than the remaining ones; and
said turning device turns said magazine as a whole either around the axis of said protruded bobbin or around a line generally parallel to said axis.

8. A coil forming apparatus in Claim 7, **characterized in that** said magazine performs the winding of said electric wire such that anyone for the winding of said bobbins is performed such that it is protruded farther more than the remaining bobbins.

9. A coil forming apparatus in any of Claims 7 or 8, **characterized in that** said bobbins are arranged to have their axes offset from each other to have no alignment.

10. A coil forming apparatus in any of Claims 7 to 9, **characterized in that** said bobbins are arranged such that a virtual line joining the centers of gravity of said bobbins may be generally circular.

11. A coil forming apparatus in Claim 10, **characterized in that** the axes of said bobbins are radially arranged either outward or obliquely outward from the center of said generally circular virtual line.

12. A coil forming apparatus in Claim 10, **characterized in that** the axes of said bobbins are arranged generally in parallel with each other.

13. A coil forming apparatus in Claim 7, **characterized: in that** said base holder has a disc shape; and **in that** said bobbins are arranged to move forward or backward along axes extending radially from the center point of said base holder.

14. A coil forming apparatus in Claim 7 or 13, **characterized in that** said bobbins have a sector shape widened along said axes.

15. A coil forming apparatus in any of Claims 7, 13, or 14, **characterized in that** each of said bobbins includes such shaping blocks (33, 34) removably as to arrange the shape of the single-pole coil to be wound.

16. A coil forming apparatus in any of Claims 7, 13, 14, or 15, **characterized in that** said magazine is formed such that a contour formed by the distal ends of all of said bobbins being moved backward has a circular shape around the center point of said base holder.

17. A coil forming apparatus in any of Claims 7, 13, 14, 15 or 16, **characterized: in that** separate plates extended from the outer circumference of said base holder are arranged on the two sides of each of said bobbins thereby to hold predetermined spacings between said separate plates and said bobbins.

## Patentansprüche

1. Verfahren zum Herstellen einer Motorspule mit mehreren fortlaufenden Einzelpolwicklungen (90, Z90), die durch einen elektrischen Draht (79, Z99) in einer Schleifenform gewickelt sind, unter Verwendung eines Magazins (2, Z2), das mehrere Spulenkörper (3, Z3) enthält, wobei
ein elektrischer Draht auf einen ersten zu wickelnden Spulenkörper gewickelt wird, indem ihm der elektrische Draht zugeführt wird und das Magazin als Ganzes entweder um die Achse des Spulenkörpers oder um eine sich allgemein parallel zu der Achse erstreckende Linie gedreht wird, um die Einzelpolwicklung herzustellen, und
die Einzelpolwicklung anschließend auf ähnliche Weise wie für den ersten Spulenkörper um die übrigen Spulenkörper gewickelt wird, um die Motorspule herzustellen,
wobei das Wickeln des elektrischen Drahtes derart ausgeführt wird, dass die Achsen der Spulenkörper zum Wickeln des elektrischen Drahtes aufeinanderfolgend in die Nähe der Drehmittelachse des Magazins gebracht werden, und
wobei das Verfahren **dadurch gekennzeichnet ist, dass**
ein Magazin mit einem Basishalter (20) verwendet wird, und mehrere Spulenkörper derart auf dem Außenumfang des Basishalters angeordnet sind, dass sie relativ zum Basishalter beweglich sind;
das Verfahren aufweist:
einen Spulenkörperausfahrschritt, in dem der erste der Spulenkörper derart bewegt wird, dass er weiter hervorsteht als die übrigen Spulenkörper; und
einen Wickelschritt zum Umwickeln des hervorstehenden ersten Spulenkörpers mit dem elektrischen Draht zum Herstellen der Einzelpolwicklung durch eine Vorschubbewegung des ersten Spulenkörpers allgemein in eine Richtung mit dem elektrischen Draht und Drehen des Magazins als Ganzes entweder um die Achse des ersten Spulenkörpers oder um eine zu der Achse im Allgemeinen parallelen Mitte; und
dadurch, dass
der Spulenkörperausfahrschritt und der Wickelschritt bezüglich benachbarten Spulenkörpern aufeinanderfolgend ausgeführt werden, um die Motorspule herzustellen.

2. Verfahren nach Anspruch 1, **dadurch gekennzeichnet, dass** das Wickeln des elektrischen Drahtes derart ausgeführt wird, dass jeder einzelne zu wickelnde Spulenkörper für den Wickelvorgang weiter hervorsteht als die übrigen Spulenkörper.

3. Verfahren nach Anspruch 1 oder 2, **dadurch gekennzeichnet, dass** die Spulenkörper derart angeordnet sind, dass ihre Achsen derart voneinander versetzt sind, dass sie nicht miteinander ausgerichtet sind.

4. Verfahren nach Anspruch 1, **dadurch gekennzeichnet, dass** die Spulenkörper dazu geeignet sind, in ihrer axialen Richtung nach vorne oder nach hinten bewegt zu werden, so dass ein Spulenkörper im Spulenkörperausfahrschritt nach vorne bewegt wird, so dass er weiter hervorsteht als die übrigen Spulenkörper.

5. Verfahren nach Anspruch 4, **dadurch gekennzeichnet, dass** nach dem Wickelschritt ein Spulenkörpereinfahrschritt ausgeführt wird, um den Spulenkörper mit der Einzelpolwicklung nach hinten zu bewegen.

6. Verfahren nach einem der Ansprüche 1, 4 oder 5, **dadurch gekennzeichnet, dass** der Wickelschritt durch Umkehren der Drehrichtung des Magazins für jeden der Spulenkörper nacheinander ausgeführt wird.

7. Vorrichtung zum Herstellen einer Motorspule mit mehreren fortlaufenden Einzelpolwicklungen, die durch einen elektrischen Draht in einer Schleifenform gewickelt sind, mit:
einem Magazin mit mehreren Spulenkörpern; und
einer Drehvorrichtung (4) zum Drehen des Magazins als Ganzes für den Wickelvorgang entweder um die Achse eines der Spulenkörper oder um eine sich allgemein parallel zu der Achse erstreckende Linie,
wobei das Magazin das Wickeln des elektrischen Drahts derart ausführt, dass die Achsen der Spulenkörper zum Wickeln des elektrischen Drahtes aufeinanderfolgend in die Nähe der Drehmittenachse des Magazins gebracht werden, und
das Magazin einen Basishalter und mehrere Spulenkörper enthält, die derart auf dem Außenumfang des Basishalters angeordnet sind, dass sie bezüglich des Basishalters beweglich sind, so dass jeweils einer der Spulenkörper weiter hervorstehen kann als die übrigen Spulenträger, und
die Drehvorrichtung das Magazin als Ganzes entweder um die Achse des hervorstehenden Spulenkörpers oder um eine sich allgemein parallel zu der Achse erstreckende Linie dreht.

8. Vorrichtung nach Anspruch 7, **dadurch gekennzeichnet, dass** das Magazin das Wickeln des elektrischen Drahtes derart ausführt, dass einer der Spulenkörper für den Wickelvorgang weiter hervorsteht als die übrigen Spulenkörper.

9. Vorrichtung nach Anspruch 7 oder 8, **dadurch gekennzeichnet, dass** die Spulenkörper derart angeordnet sind, dass ihre Achsen derart voneinander versetzt sind, dass sie nicht miteinander ausgerichtet sind.

10. Vorrichtung nach einem der Ansprüche 7 bis 9, **dadurch gekennzeichnet, dass** die Spulenkörper derart angeordnet sind, dass eine gedachte Linie, die die Schwerpunkte der Spulenkörper verbindet, allgemein kreisförmig ist.

11. Vorrichtung nach Anspruch 10, **dadurch gekennzeichnet, dass** die Achsen der Spulenkörper von der Mitte der allgemein kreisförmigen gedachten Linie entweder nach außen oder schräg nach außen radial angeordnet sind.

12. Vorrichtung nach Anspruch 10, **dadurch gekennzeichnet, dass** die Achsen der Spulenkörper allgemein parallel zueinander angeordnet sind.

13. Vorrichtung nach Anspruch 7, **dadurch gekennzeichnet, dass**
der Basishalter scheibenförmig ausgebildet ist; und
die Spulenkörper derart angeordnet sind, dass sie sich entlang Achsen, die sich vom Mittelpunkt des Basishalters radial erstrecken, nach vorne oder nach hinten bewegen.

14. Vorrichtung nach Anspruch 7 oder 13, **dadurch gekennzeichnet, dass** die Spulenkörper eine sich entlang den Achsen erweiternde Sektorform haben.

15. Vorrichtung nach einem der Ansprüche 7, 13 oder 14, **dadurch gekennzeichnet, dass** jeder der Spulenkörper entfernbare Formgebungsblöcke (33, 34) zum Festlegen der Form der zu wickelnden Einzelpolwicklung aufweist.

16. Vorrichtung nach einem der Ansprüche 7, 13, 14 oder 15, **dadurch gekennzeichnet, dass** das Magazin derart ausgebildet ist, dass eine durch die distalen Enden aller nach hinten bewegten Spulenkörper gebildete Kontur eine Kreisform um den Mittelpunkt des Basishalters hat.

17. Vorrichtung nach einem der Ansprüche 7, 13, 14, 15 oder 16, **dadurch gekennzeichnet, dass** sich vom Außenumfang des Basishalters erstreckende einzelne Platten auf beiden Seiten jedes der Spulenkörper angeordnet sind, um vorgegebene Abstände zwischen den einzelnen Platten und den Spulenkörpern aufrechtzuerhalten.

## Revendications

1. Procédé de formation d'une bobine moteur comportant une pluralité de bobinages unipolaires continues (90, Z90) enroulées avec un fil électrique (79, Z99) en forme de boucle,
utilisant un magasin (2, Z2) incluant une pluralité de bobines (3, Z3) ; et
en ce qu'une première à enrouler desdites bobines est enroulée avec ledit fil électrique en l'alimentant avec ledit fil électrique et en tournant ledit magasin comme un tout soit autour de l'axe de ladite bobine ou autour d'une ligne globalement parallèle au dit axe, pour former ainsi ledit bobinage unipolaire, et en ce que ledit bobinage unipolaire est sensiblement formé autour des bobines restantes comme ladite première bobine pour former ainsi ledit bobinage de moteur,
dans lequel l'enroulement dudit fil électrique est réalisé de telle manière que les axes des bobines pour enrouler ledit fil électrique sont séquentiellement amenés près de l'axe central de rotation dudit magasin, et
dans lequel le procédé est **caractérisé :**
**par** l'utilisation d'un magasin incluant un support de base (20) et une pluralité de bobines agencées sur la circonférence extérieure dudit support de base de telle manière qu'elles peuvent se déplacer relativement au dit support de base ;
en ce qu'il comprend :
une étape de saillie de bobine consistant à déplacer la première desdites bobines pour qu'elle fasse saillie plus loin que les bobines restantes ; et
une étape d'enroulement consistant à enrouler ladite première bobine faisant saillie avec ledit fil électrique pour former le bobinage unipolaire en alimentant ladite première bobine globalement dans une direction avec le fil électrique et en tournant ledit magasin comme un tout soit autour de l'axe de ladite première bobine ou autour du centre globalement parallèle au dit axe ; et
en ce que ladite étape de saillie de bobine et ladite étape d'enroulement sont réalisées séquentiellement sur les bobines voisines pour former ledit bobinage de moteur.

2. Procédé de formation de bobinage selon la revendication 1, **caractérisé en ce que** l'enroulement dudit fil électrique est réalisé de telle manière que l'enroulement de l'une quelconque desdites bobines est réalisé de telle manière qu'elle fait saillie plus loin que les bobines restantes.

3. Procédé de formation de bobinage selon l'une quelconque des revendications 1 à 2, **caractérisé en ce que** lesdites bobines sont agencées pour avoir leurs axes décalés les uns des autres pour ne pas avoir d'alignement.

4. Procédé de formation de bobinage selon la revendication 1, **caractérisé en ce que** lesdites bobines sont agencées pour se déplacer vers l'avant ou vers l'arrière globalement linéairement dans leur direction axiale de telle manière qu'une bobine est déplacée vers l'avant lors de ladite étape de saillie de bobine pour faire saillie plus loin que les bobines restantes.

5. Procédé de formation de bobinage selon la revendication 4, **caractérisé en ce que** l'étape de rétraction de bobine est réalisée après ladite étape d'enroulement pour déplacer ladite bobine ayant ledit bobinage unipolaire vers l'arrière.

6. Procédé de formation de bobinage selon l'une quelconque des revendications 1, 4 ou 5, **caractérisé en ce que** ladite étape d'enroulement est réalisée par l'inversion de la direction de rotation dudit magasin séquentiellement pour chacune desdites bobines.

7. Dispositif pour former un bobinage de moteur comportant une pluralité de bobinages unipolaires continus enroulés avec un fil électrique en forme de boucle, comprenant :
un magasin incluant une pluralité de bobines ; et
un dispositif tournant (4) pour faire tourner ledit magasin comme un tout soit autour de l'axe de l'une quelconque desdites bobines pour l'enroulement ou autour d'une ligne globalement parallèle au dit axe,
dans lequel ledit magasin réalise l'enroulement dudit fil électrique de telle manière que les axes des bobines pour enrouler ledit fil électrique sont séquentiellement amenés près de l'axe central de rotation dudit magasin, et
ledit magasin inclut un support de base et une pluralité de bobines agencées sur la circonférence extérieure dudit support de base de telle manière qu'elles peuvent se déplacer relativement au dit support de base de telle manière que l'une quelconque desdites bobines peut faire saillie plus loin que les bobines restantes et ;
ledit dispositif tournant fait tourner ledit magasin comme un tout soit autour de l'axe de ladite bobine saillante ou autour d'une ligne globalement parallèle au dit axe.

8. Dispositif de formation de bobinage selon la revendication 7, **caractérisé en ce que** ledit magasin réalise l'enroulement dudit fil électrique de telle manière que l'enroulement de l'une quelconque desdites bobines est réalisé de telle manière qu'elle fait saillie plus loin que les bobines restantes.

9. Dispositif de formation de bobinage selon l'une quelconque des revendications 7 ou 8, **caractérisé en ce que** lesdites bobines sont agencées pour avoir leurs axes décalés les uns des autres pour ne pas avoir d'alignement.

10. Dispositif de formation de bobinage selon l'une quelconque des revendications 7 à 9, **caractérisé en ce que** lesdites bobines sont agencées de telle manière qu'une ligne virtuelle joignant les centres de gravité desdites bobines peut être globalement circulaire.

11. Dispositif de formation de bobinage selon la revendication 10, **caractérisé en ce que** les axes desdites bobines sont agencés radialement soit vers l'extérieur soit obliquement vers l'extérieur depuis le centre de ladite ligne virtuelle globalement circulaire.

12. Dispositif de formation de bobinage selon la revendication 10, **caractérisé en ce que** les axes desdites bobines sont agencés globalement parallèles entre eux.

13. Dispositif de formation de bobinage selon la revendication 7, **caractérisé en ce que** ledit support de base a une forme de disque ; et
**en ce que** lesdites bobines sont agencées pour se déplacer vers l'avant ou vers l'arrière le long d'axes s'étendant radialement depuis le point central dudit support de base.

14. Dispositif de formation de bobinage selon la revendication 7 ou 13, **caractérisé en ce que** lesdites bobines ont une forme de secteur élargie le long desdits axes.

15. Dispositif de formation de bobinage selon l'une quelconque des revendications 7, 13, ou 14, **caractérisé en ce que** chacune desdites bobines inclut des blocs de formage (33, 34) amovibles de façon à agencer la forme dudit bobinage unipolaire à enrouler.

16. Dispositif de formation de bobinage selon l'une quelconque des revendications 7, 13, 14, ou 15, **caractérisé en ce que** ledit magasin est formé de telle manière qu'un contour formé par les extrémités distales de toutes lesdites bobines étant déplacées vers l'arrière a une forme circulaire autour du point central dudit support de base.

17. Dispositif de formation de bobinage selon l'une quelconque des revendications 7, 13, 14, 15, ou 16, **caractérisé en ce que** des plaques séparées étendues depuis la circonférence extérieure dudit support de base sont agencées sur les deux côtés de chacune desdites bobines pour ainsi maintenir des espacements prédéterminés entre lesdites plaques séparées et lesdites bobines.
